Europäisches Patentamt

European Patent Office

Office européen des brevets

(19)

(11) Publication number: **0 049 428**
**B1**

(12) **EUROPEAN PATENT SPECIFICATION**

(45) Date of publication of patent specification: **17.12.86**

(51) Int. Cl.⁴: **H 04 J 3/17, H 04 Q 11/04**

(21) Application number: **81107614.0**

(22) Date of filing: **17.09.79**

(60) Publication number of the earlier application in accordance with Art. 76 EPC: **0 025 465**

(54) Apparatus for use in telephone communication.

(43) Date of publication of application:
**14.04.82 Bulletin 82/15**

(45) Publication of the grant of the patent:
**17.12.86 Bulletin 86/51**

(84) Designated Contracting States:
**CH DE FR GB IT NL SE**

(56) References cited:
**US-A-3 304 373**
**US-A-3 836 719**

**INTERNATIONAL CONFERENCE ON DIGITAL SATELLITE COMMUNICATIONS, 23-25 October 1978 pages 248-255 Montreal, CA SAUNDERS et al. "The realization of a TDM/DSI terrestrial interface module using distributed processing techniques"**

**INTERNATIONAL CONFERENCE ON DIGITAL SATELLITE COMMUNICATIONS, 23-25 October 1978, pages 202-206 Montreal, CA DOMINGO et al. "Switching and signalling aspects concerning the integration of satellite system in the telecommunication network"**

(73) Proprietor: **E C I TELECOM LTD.**
**88 Giborei Israel Street**
**Tel Aviv (IL)**

(72) Inventor: **Piasecki, Joshua**
**Smadar 1**
**Ramat Gan (IL)**
Inventor: **Zelinkovsky, Reuven**
**Moshav Beit**
**Yehoshua (IL)**
Inventor: **Segev, Aharon**
**Hasikma 6**
**Kiryat Ono (IL)**
Inventor: **Henquin, Teodor**
**Zunz 36**
**Tel Aviv (IL)**

(74) Representative: **Eder, Ephry**
**E.EDER & CO. 2 Chichester Rents Chancery Lane**
**London WC2A 1EG (GB)**

Courier Press, Leamington Spa, England.

**0 049 428**

(58) References cited:

**NACHRICHTENTECHNISCHE ZEITSCHRIFT, vol. 18, no. 6, June 1965, pages 301-307 München, DE ADLER "Transatlantikwahl-erster interkontinentaler Fernsprechwählverkehr"**

**SIEMENS ZEITSCHRIFT, no. 4, April 1962, pages 275-276 München, DE ADLER et al. "Fernsprechwählverkehr über Transatlantikkabel"**

**INTERNATIONAL CONFERENCE ON DIGITAL SATELLITE COMMUNICATIONS, 23-25 October 1978, pages 261-268 Montreal, CA VERMA et al. "A microprocessor controlled 96/48 digital speech interpolation terminal"**

**NATIONAL TELECOMMUNICATIONS CONFERENCE, vol. 1, 3-6 December 1978, pages 14.6.1-14.6.5 Birmingham, US J.M. ELDER et al. "A speech interpolation system for private networks"**

**BELL LABORATORIES RECORD, November 1970, pages 299-306 New York, US G.R. LEOPOLD "TASI-B: A system for restoration and expansion of overseas circuits"**

**NEC RESEARCH AND DEVELOPMENT, no. 34, July 1974, pages 17-30 Tokyo, JP KUZUSHIMA, Y. et al. "30/32 channel pulse code modulation transmission system"**

## Description

The present invention relates to telephone switching apparatus and more particularly to a TASI (Time Assignment Speech Interpolation) communications system.

Time Assignment Speech Interpolation (TASI) communication systems have been known for approximately twenty years. Their function, stated in general terms, is to exploit the fact that during a normal telephone conversation, information is being transmitted only about 35% of the time. TASI communication systems serve to connect a speaker to a transmission line only during those portions of a conversation when speech is actually present. During the other portions of the conversation, the transmission line is connected to another speaker, currently speaking in another conversation.

By using time assignment speech interpolation a given number of transmission lines, say 24 can usually carry about 48 simultaneous conversations.

Most of the prior art patents known to applicants relate to systems in which assignment, synchronization and acknowledgement messages between TASI apparatus on opposite ends of a transmission trunk link are passed along control lines, separate from the voice carrying lines. This arrangement involves a number of disadvantages, principal among which is the vulnerability of the entire transmission trunk link to failure of the control lines. Another disadvantage is the inability of the conventional TASI systems to readily sense and bypass inoperative voice lines.

U.S. Patent 3,304,373 (Wright) describes long range TASI communication systems having answer-back signalling. This prior patent deals with communications between central offices, i.e. for line supervision, dialing, metering, etc. between trunks. The signalling discussed in this prior patent is appropriate for central office communications and is not appropriate for assignment type messages between two TASI terminals. Wright does not show or suggest TASI treatment of out of band signalling as described in the embodiments of the present invention (see below).

The NTC 78 Conference Record, pages 14.6.1—14.6.5 describes a TASI system operating without a control wire. This reference fails to teach apparatus for time assignment interpolation of signalling information including, for example, transmit signalling switching means and receive signalling switching means, and the reference does not provide DC pulse signalling assignment information along the transmission trunk link.

For example, the disclosure by J. M. Elder et al "A Speech Interpolation System for Private Networks" (National Telecommunications Conference, 3—6 December 1978, Vol. 1, pages 14.6.1—14.6.5) indicates that "some processing of signalling information is required. Trunk signalling and rotary dialling information are encoded and forwarded to the distance COM 2 ... where these data are decoded and ... the conventional facility trunk signalling interface is not used for call-setup or call-progress information". This COM 2 does not provide transparency of signalling transmission, and the encoding and subsequent decoding of signalling pulses has inherent limitations as to transparency.

Furthermore, although the use if digital telephone trunks is increasing rapidly in the U.S., the majority of telephone calls in the U.S. and throughout the world will remain analog during the coming few decades. There is therefore a need for TASI-type equipment capable of use with both analog and digital telephone trunks. There is also need for apparatus capable of operation with analog trunks which overcomes the design disadvantages of the prior art analog apparatus which is described in many of the prior art patents. No such apparatus presently exists.

It is also noted that no TASI-type equipment is presently available for use with out of band signalling.

The present invention seeks to provide a TASI communication system which is capable of use with both analog and digital telephone trunks which can provide transparent transmission of signalling pulses (e.g. of any width) and which overcomes one or more of the disadvantages described hereinabove and/or of other disadvantages.

According to this invention, there is provided a time assignment speech interpolation communications system for interconnecting a transmission trunk link having a first plurality of communication channels to a second plurality of communication lines on both ends of the transmission trunk link, the second plurality exceeding the first plurality, each of said second plurality of telephone communication lines comprising audio transmission means and DC pulse signalling transmission means and said transmission trunk link comprising trunk audio transmission means and trunk DC pulse signalling transmission means, wherein there is provided apparatus for carrying out time assignment speech interpolation of audio carried on said audio transmission means, said apparatus including

first audio activity detection means receiving signals along said second plurality of telephone communication lines and providing an output indication of audio activity;

transmit audio switching means for selectively connecting audio bearing communication lines to said trunk audio transmission means;

transmit audio control means receiving the audio activity output indication, controlling said transmit audio switching means and providing audio assignment messages along said transmission trunk link;

receive audio control means operative in response to assignment messages received along said transmission trunk link for providing a receive audio switching output indication;

receive audio switching means operated by said receive audio switching output indication for selectively

3

**0 049 428**

connecting audio bearing trunk audio transmission means to appropriate communication lines in accordance with said assignment messages;

first signalling detection means receiving D.C. pulses along said second plurality of telephone communication lines and providing an output indication of signalling activity;

characterized in that it includes apparatus for providing time assignment interpolation of signalling information carried on said signalling transmission means, said apparatus including:

transmit signalling control means receiving the signalling activity output indication, providing a transmit signalling switching output indication, and providing DC pulse signalling assignment information along said transmission trunk link;

transmit signalling switching means operated by said signalling switching output indication for selectively connecting signalling bearing communication lines to said trunk DC pulse signalling transmission means;

receive signalling control means operative in response to assignment messages received along said transmission trunk link for providing a receive signalling switching output indication; and

receive signalling switching means operated by said receive signalling switching output indication for selectively connecting signalling bearing trunk signalling transmission means to appropriate communication lines in accordance with said assignment messages,

whereby transmission of DC pulse signalling along said trunk signalling transmission means is transparent and does not engage the trunk audio transmission means.

The present invention will be more fully understood and appreciated from the following detailed description taken in conjunction with the drawings in which:

Fig. 1 is a block diagram illustrating the orientation of the apparatus of the invention in a telephone system;

Fig. 2 is a block diagram illustration of the apparatus of the system except for out of band signalling apparatus;

Fig. 3 is a timing diagram indicating various timing frames employed in the apparatus of the invention;

Fig. 4 is a block diagram of transmit timing circuitry;

Fig. 5 is a main timing diagram of the system;

Fig. 6 is a timing diagram of the transmit synchonization timing;

Fig. 7 is a block diagram of receive timing circuitry;

Fig. 8 is a timing diagram of the receive synchronization timing;

Fig. 9 is a block diagram of interface circuitry;

Fig. 10 is a block diagram of the transmit speech flow in the circuitry of Fig. 2;

Fig. 11 is a timing diagram of the transmit speech flow timing;

Fig. 12 is a block diagram of the receive speech flow in the circuitry of Fig. 2;

Fig. 13 is a timing diagram of the receive speech flow timing;

Fig. 14 is a block diagram of speech detection circuitry;

Fig. 15 is a simplified illustration of a portion of the circuitry of Fig. 14;

Fig. 16 is a simplified illustration of echo suppression circuitry forming part of the circuitry of Fig. 14;

Fig. 17 is functional block diagram of the CPU;

Fig. 18 is a flow chart indicating operation of message interrupt operations of the CPU;

Figs. 19—22 are flow charts illustrating monitor operations of the CPU;

Fig. 23 is a flowchart illustrating operation of the interrupt function of the CPU;

Fig. 24 is a flowchart illustrating the acknowledge subroutine of the CPU;

Fig. 25 is a flowchart illustrating the system synchronization protocol;

Fig. 26 is a flowchart illustrating the synchronization routine of the system;

Fig. 27 is a flowchart illustrating the main routine of the system;

Fig. 28 is a block diagram of the transmitter control memory;

Fig. 29 is a block diagram of the receive control memory;

Fig. 30 is a block diagram of the modem transmitter;

Fig. 31 is a block diagram of the modem receiver;

Fig. 32 is a block diagram of transmit signalling circuitry;

Fig. 33 is a block diagram of receive signalling circuitry;

Fig. 34 is a block diagram illustrating the placement of a concentrator embodying the present invention in a remote switching configuration;

Fig. 35 is a block diagram illustrating the component portions of the concentrator embodying the present invention at one end of a remote switching configuration;

Fig. 36 is a schematic illustration of interface circuitry coupling a 2-wire telephone line with a 6-wire telephone channel at a subscriber end of a remote switching configuration; and

Fig. 37 is a schematic illustration of interface circuitry coupling a 2-wire telephone line with a 6-wire telephone channel at a C.O. end of a remote switching configuration.

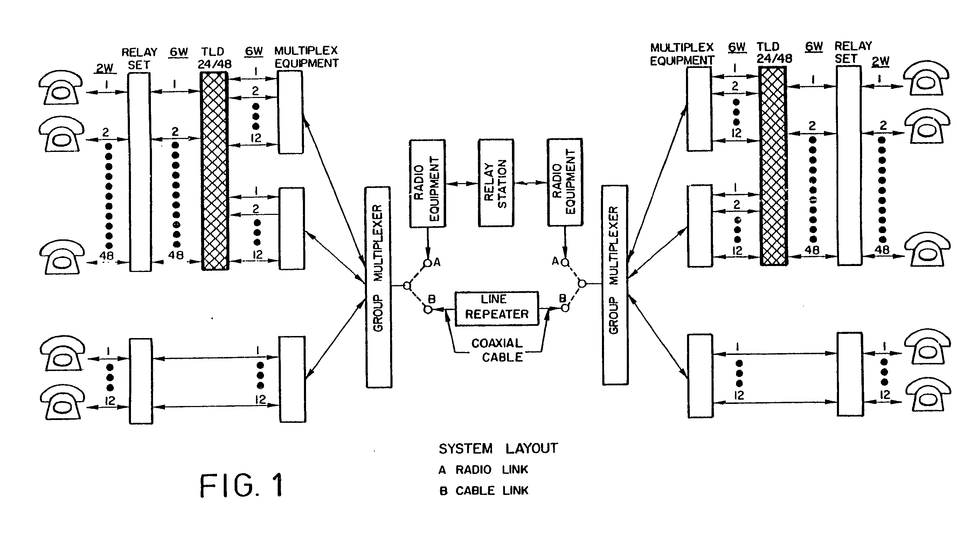

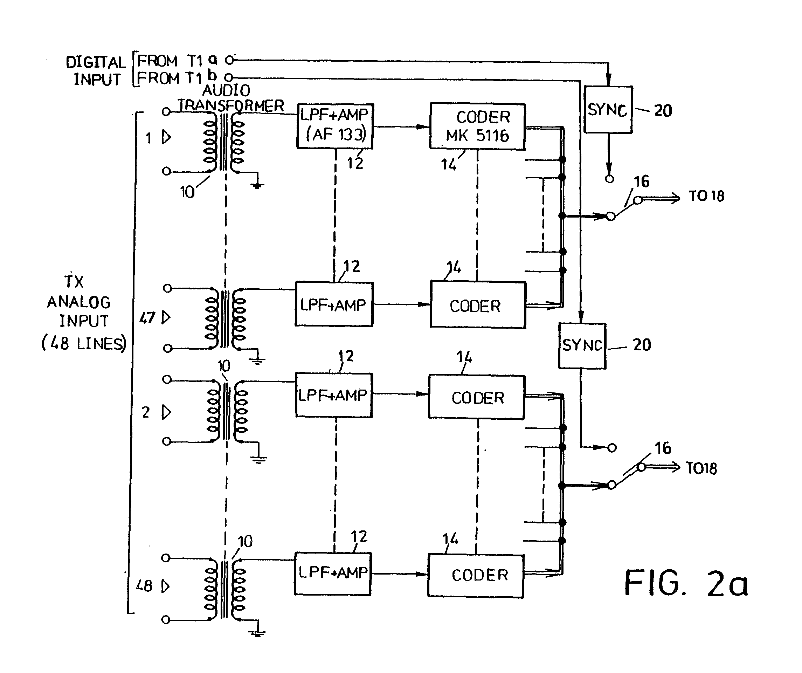

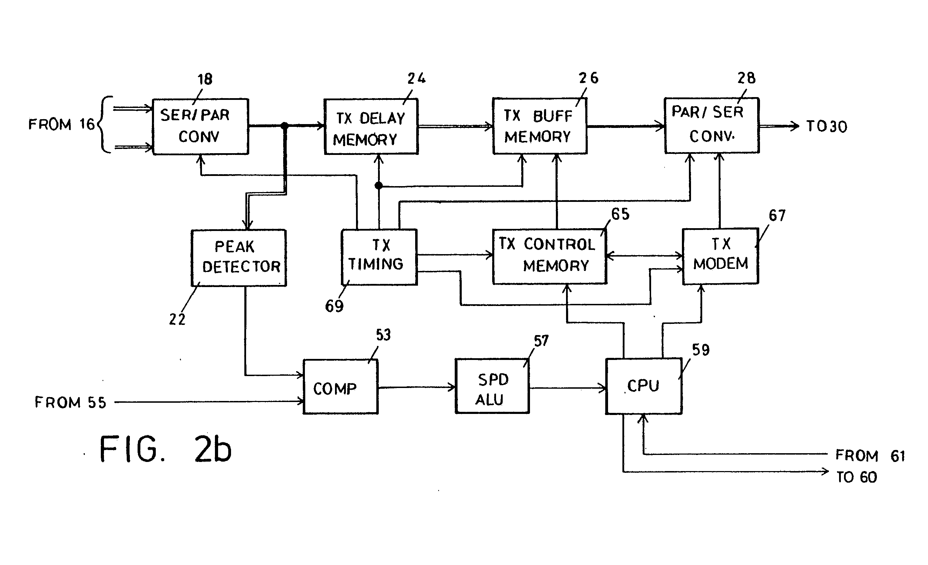

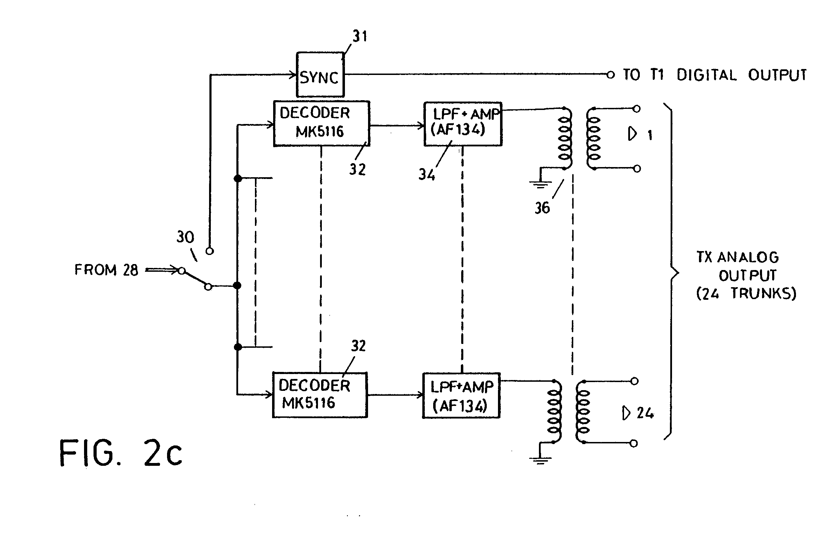

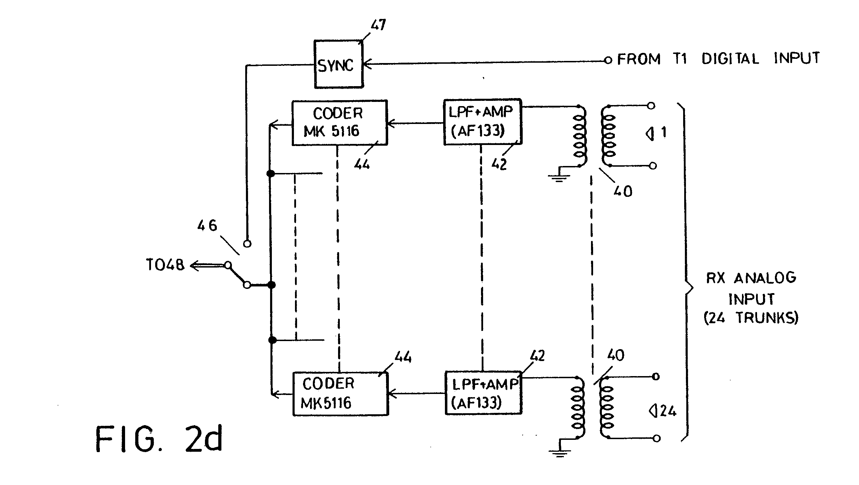

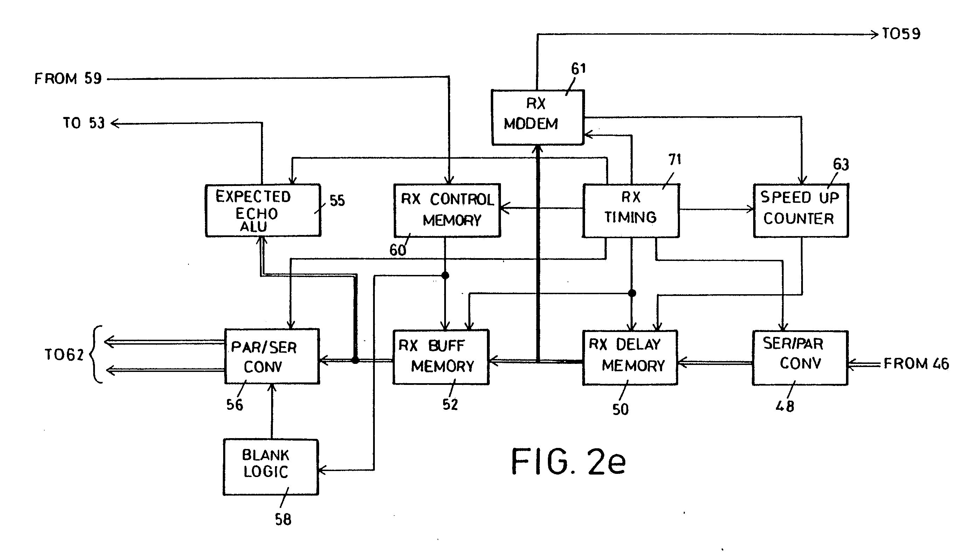

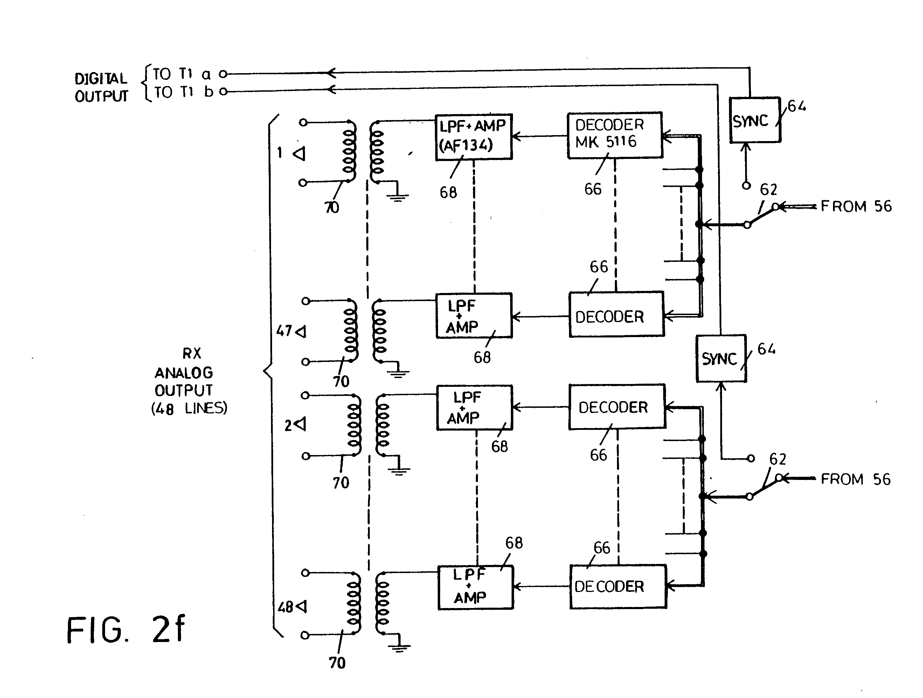

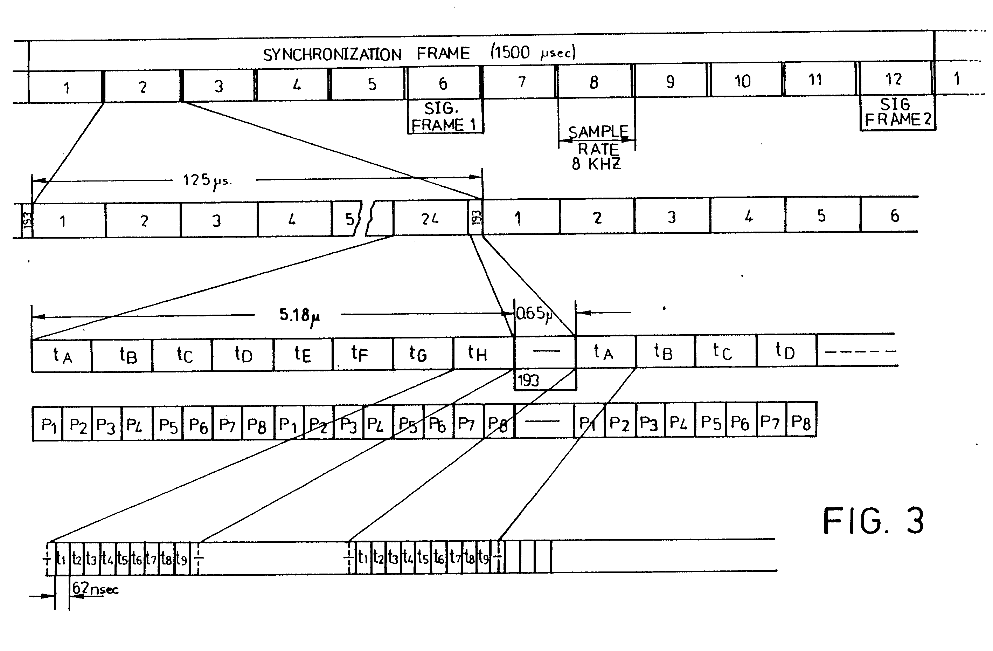

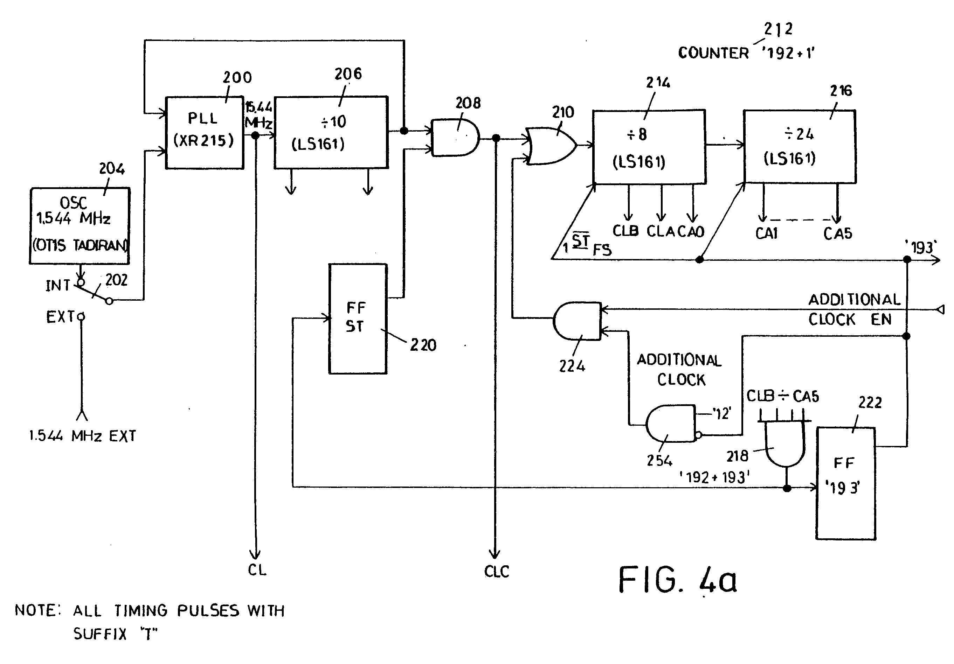

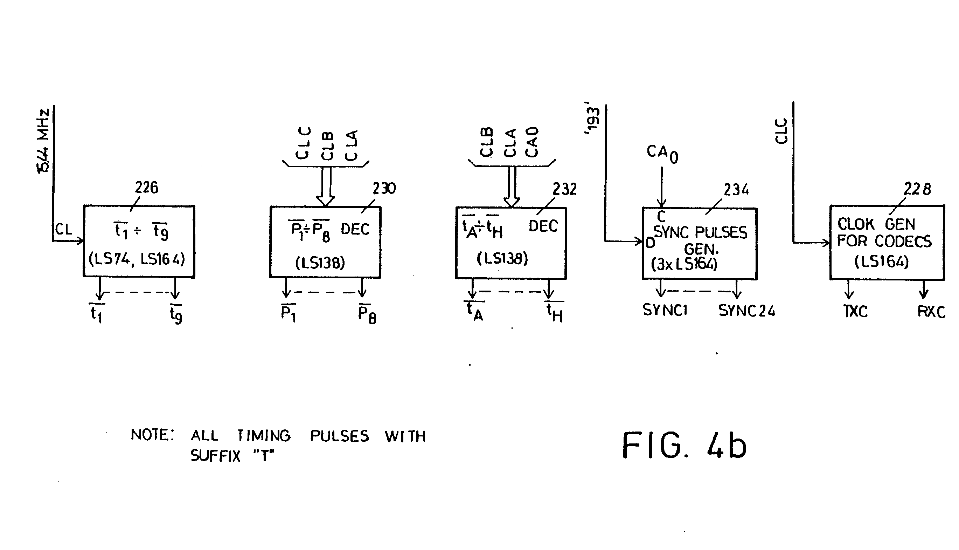

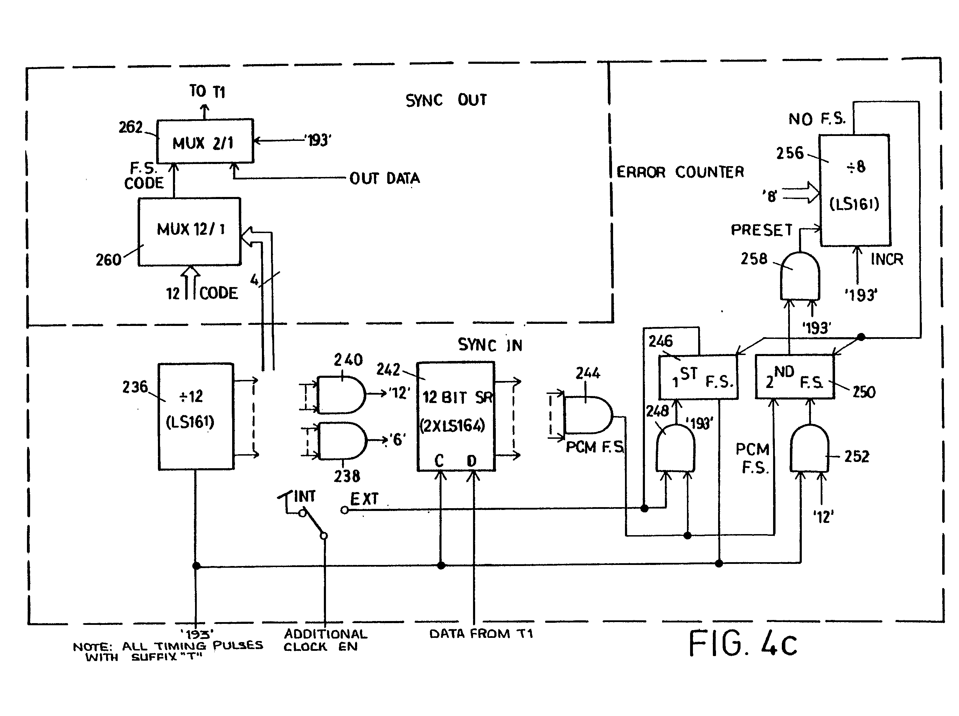

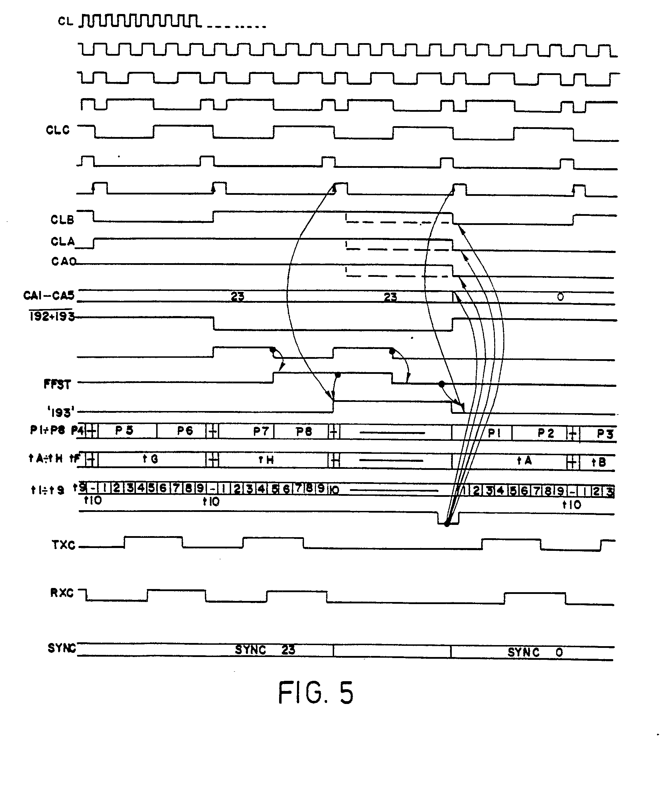

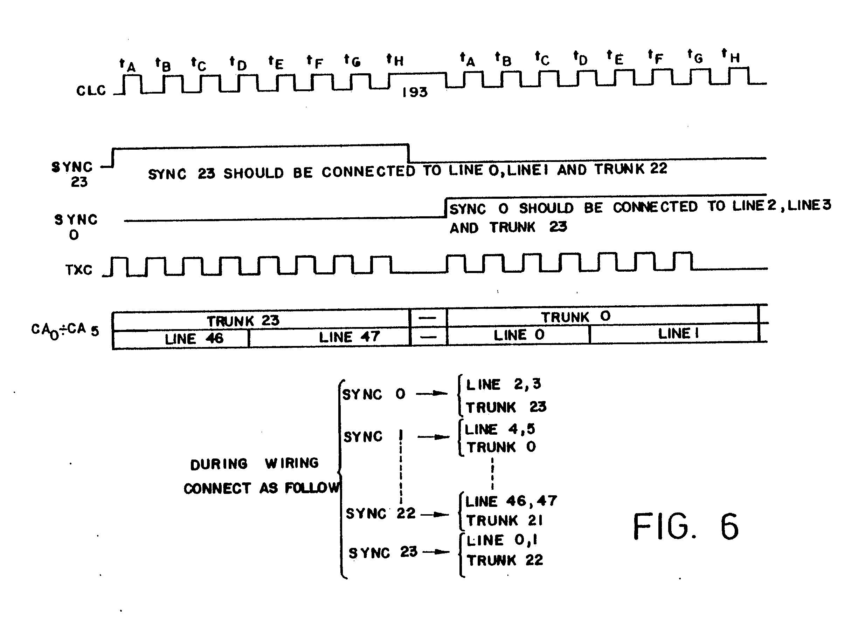

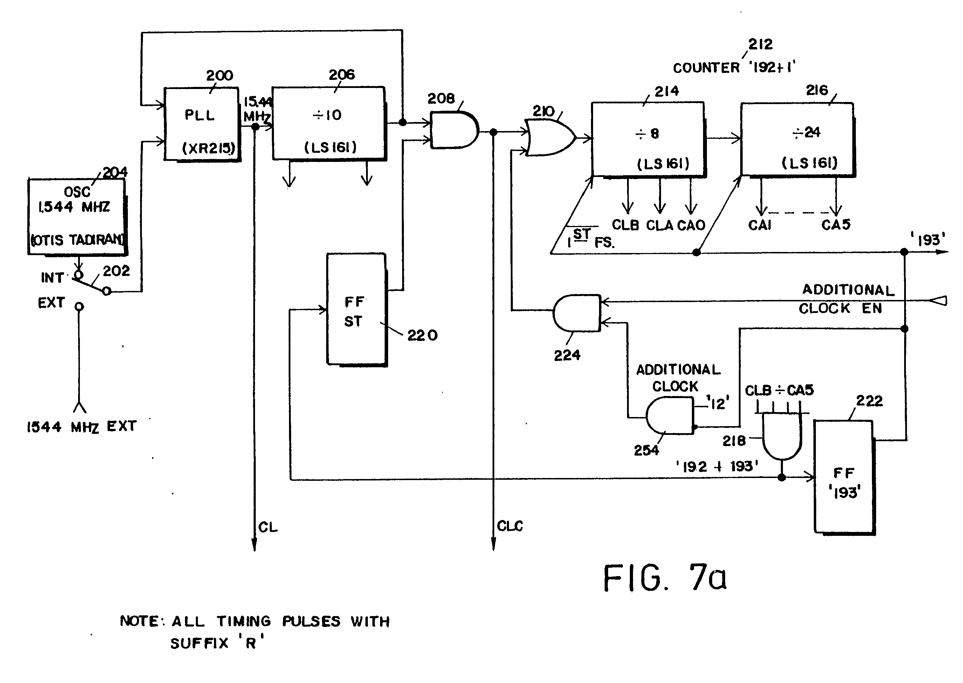

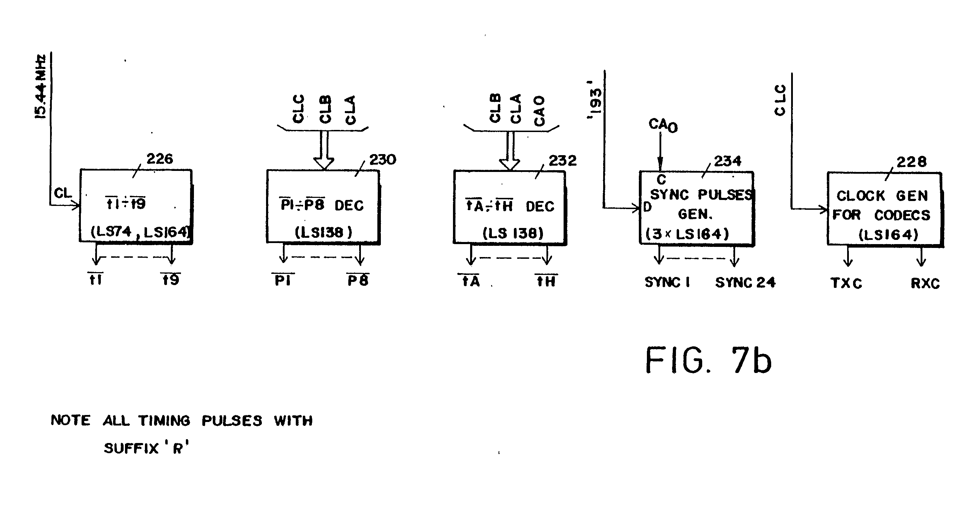

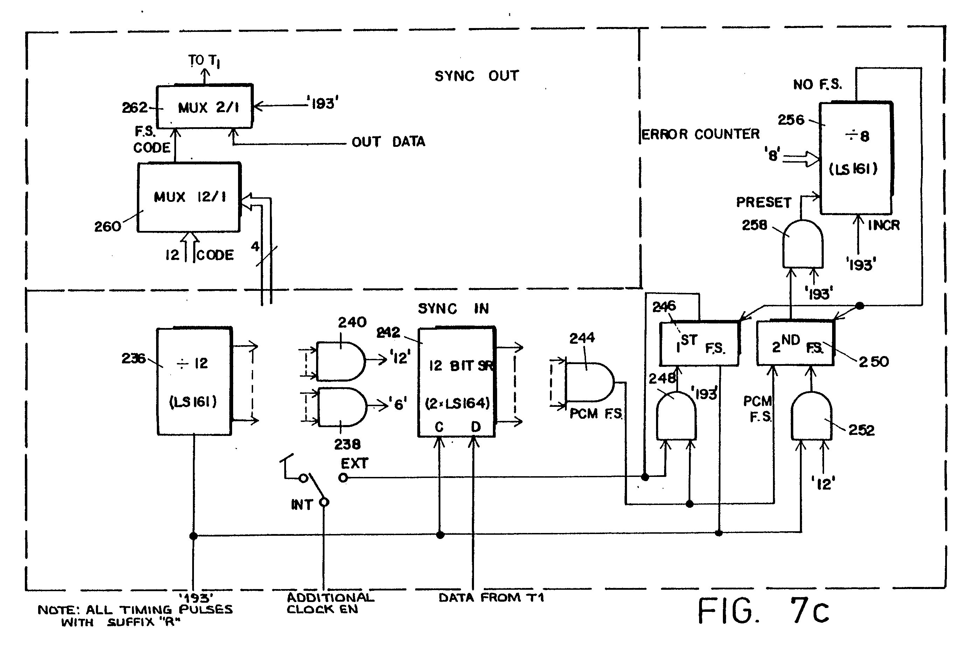

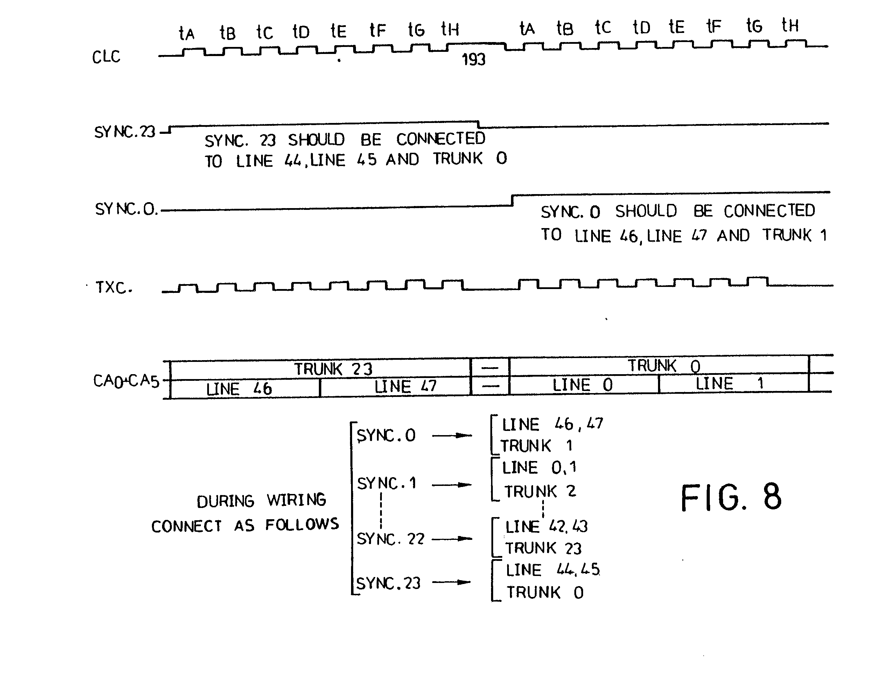

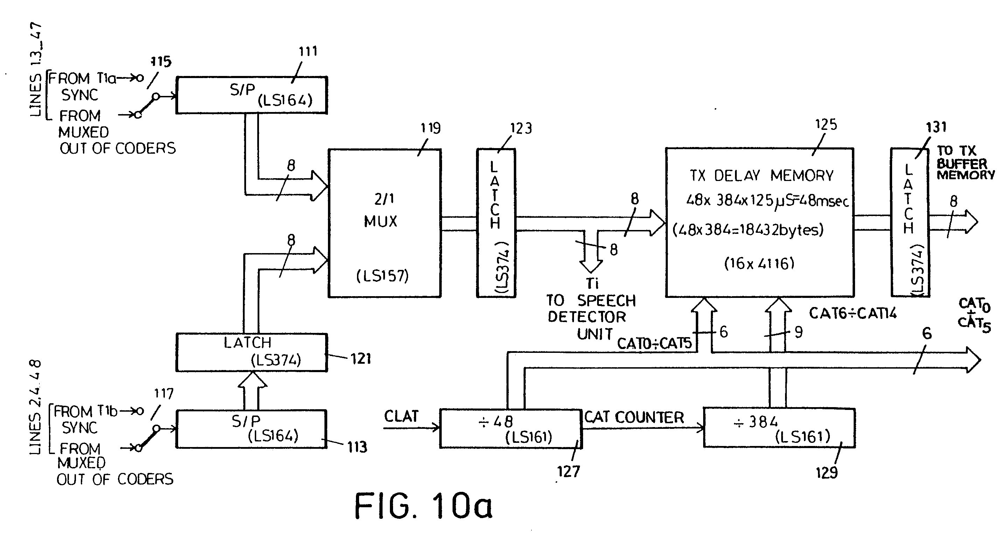

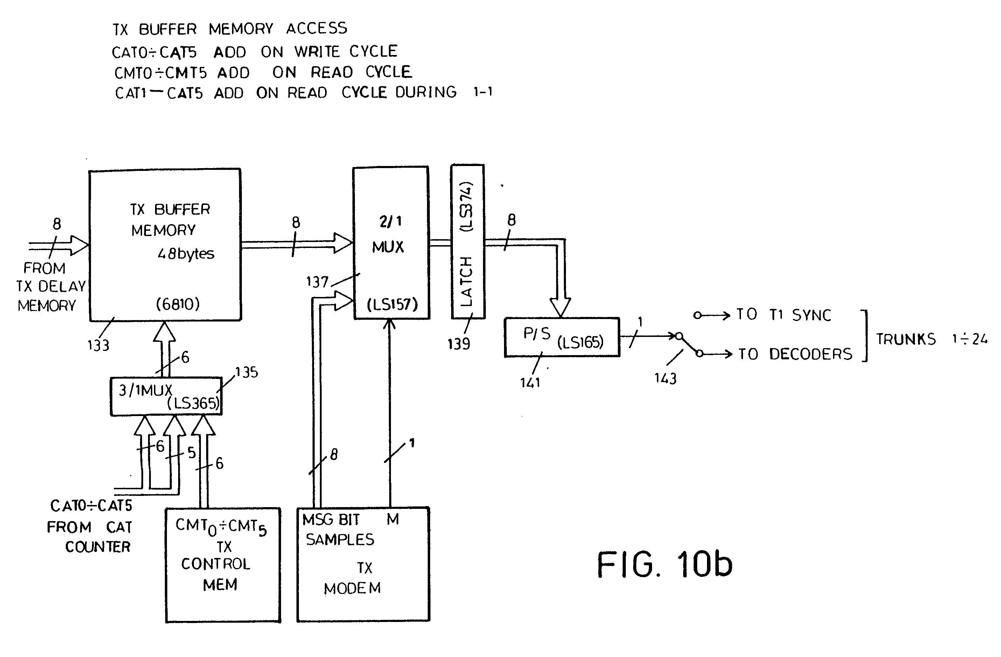

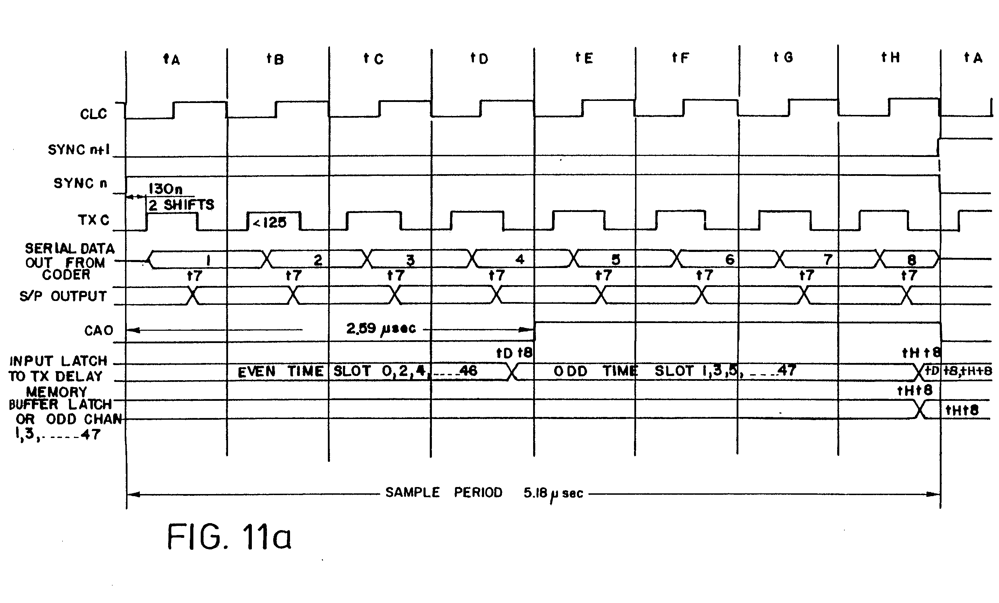

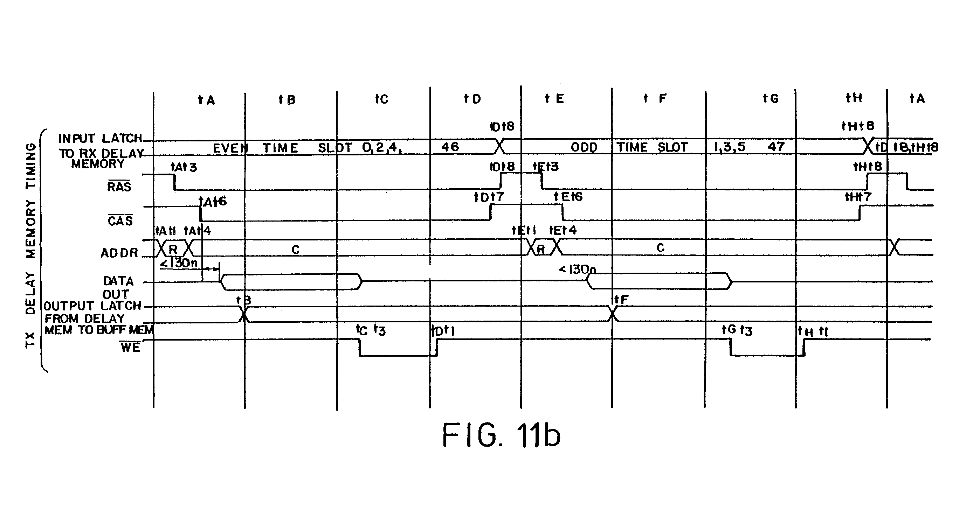

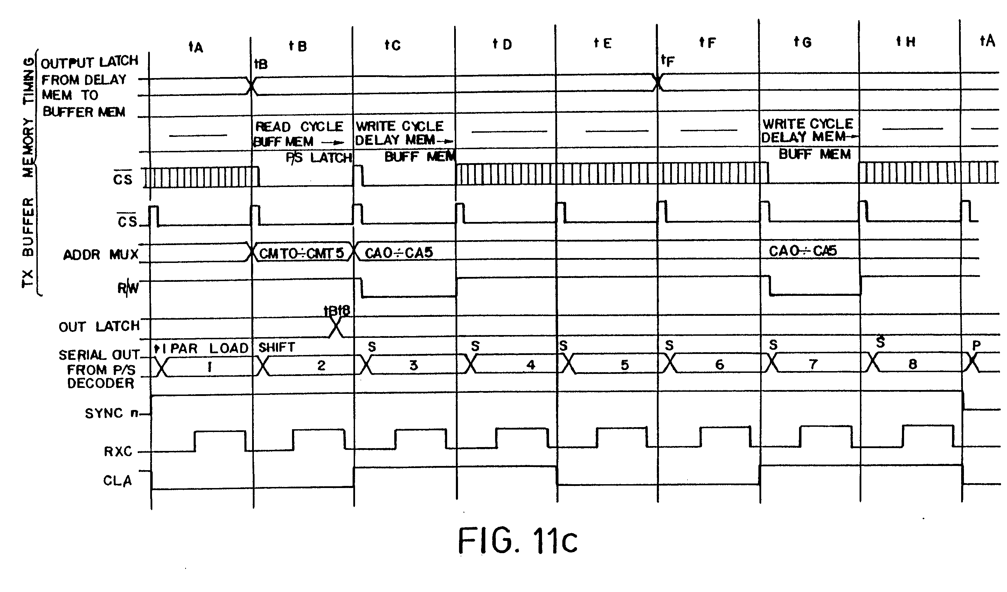

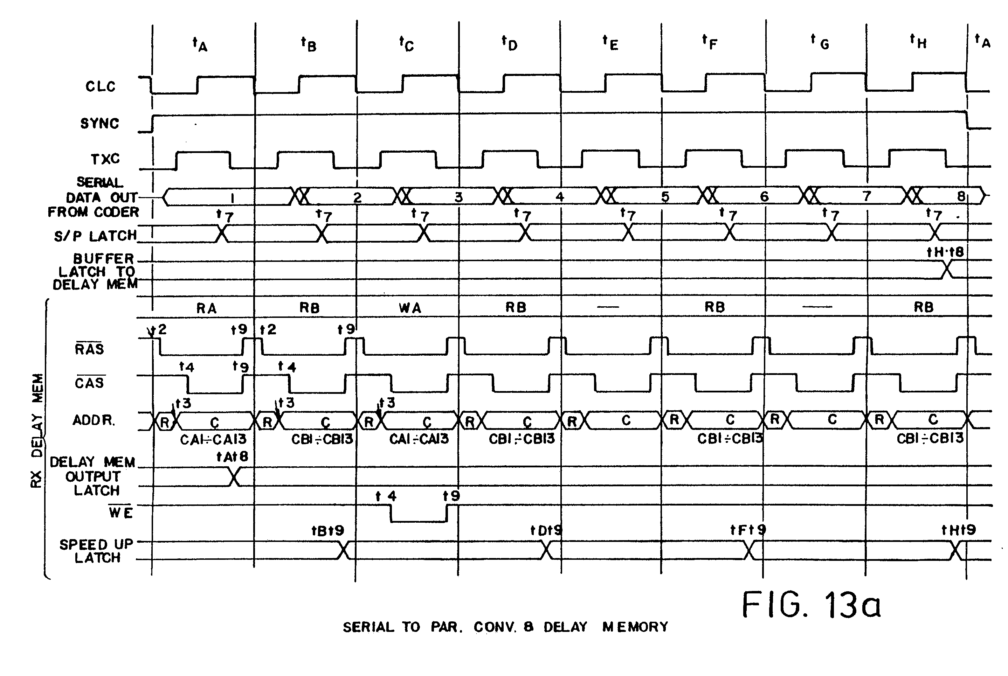

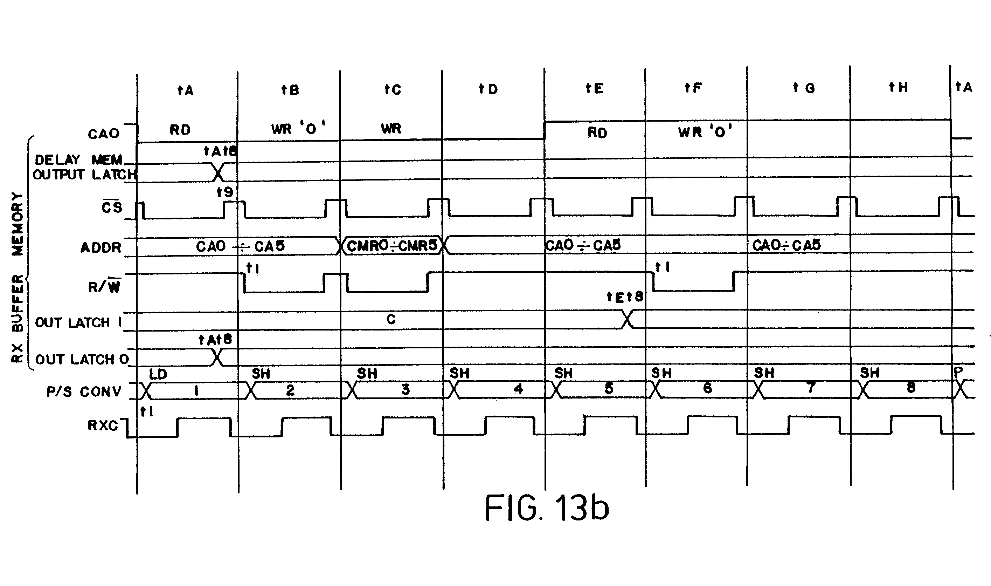

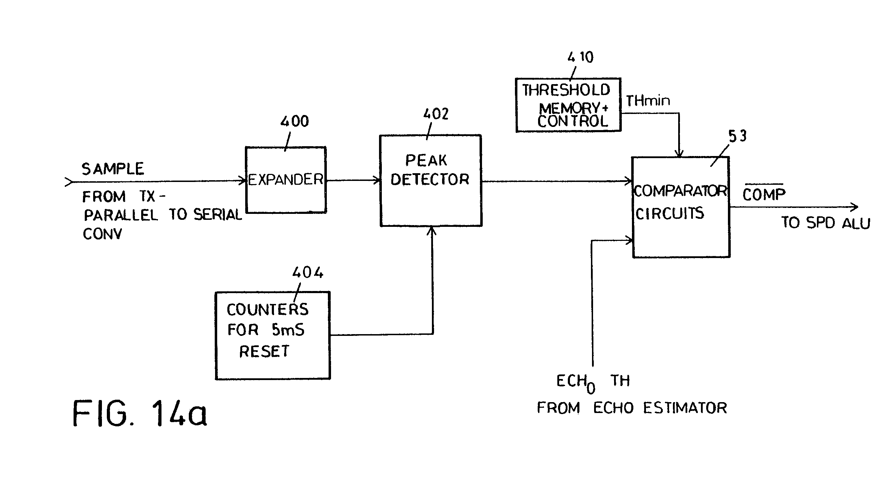

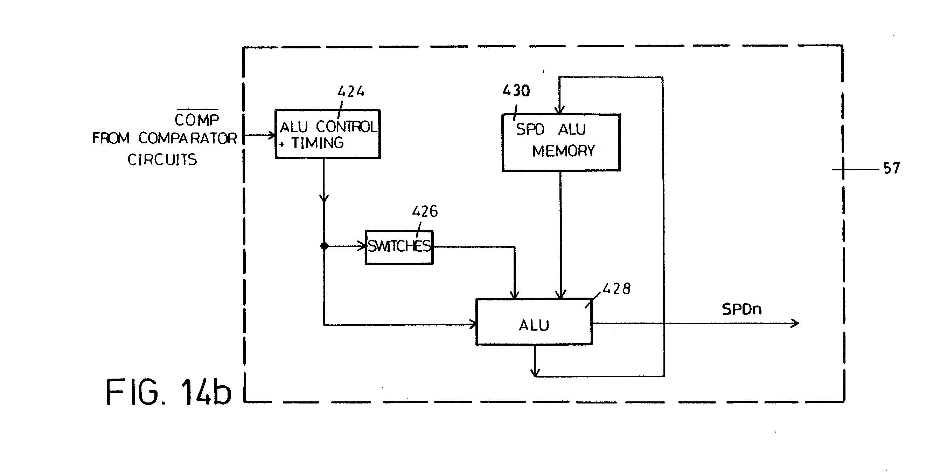

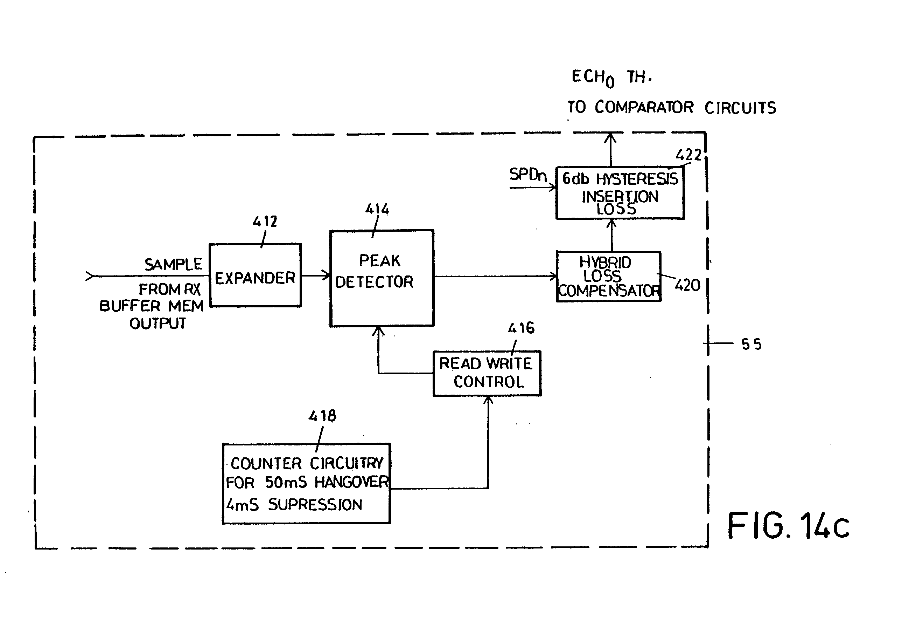

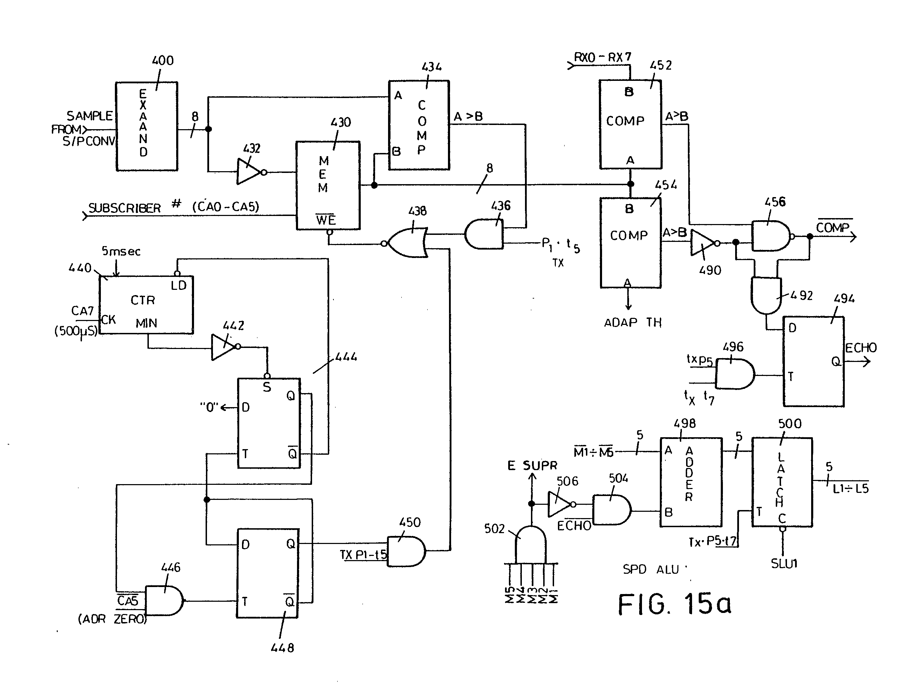

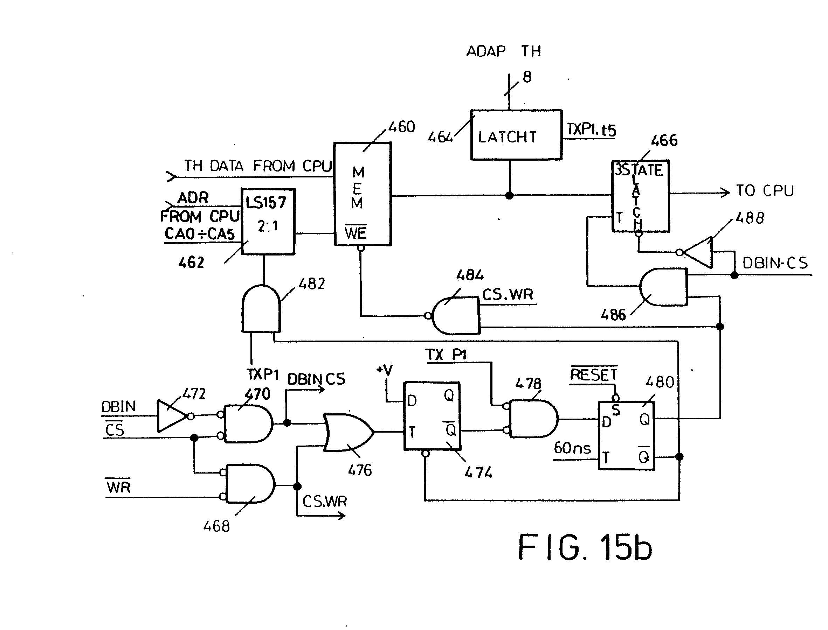

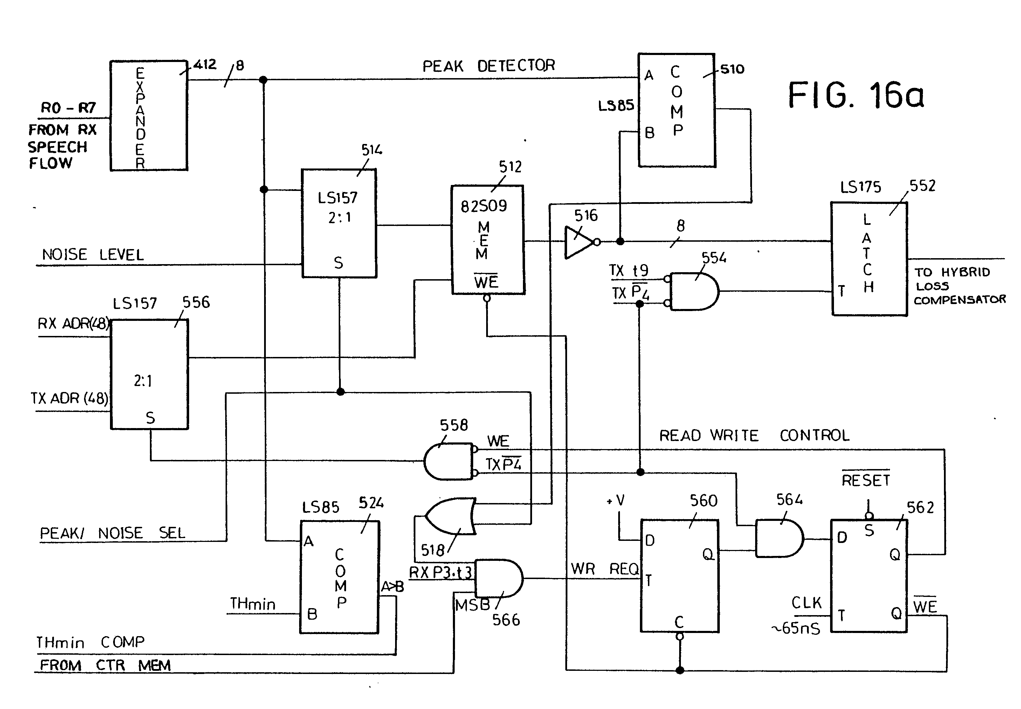

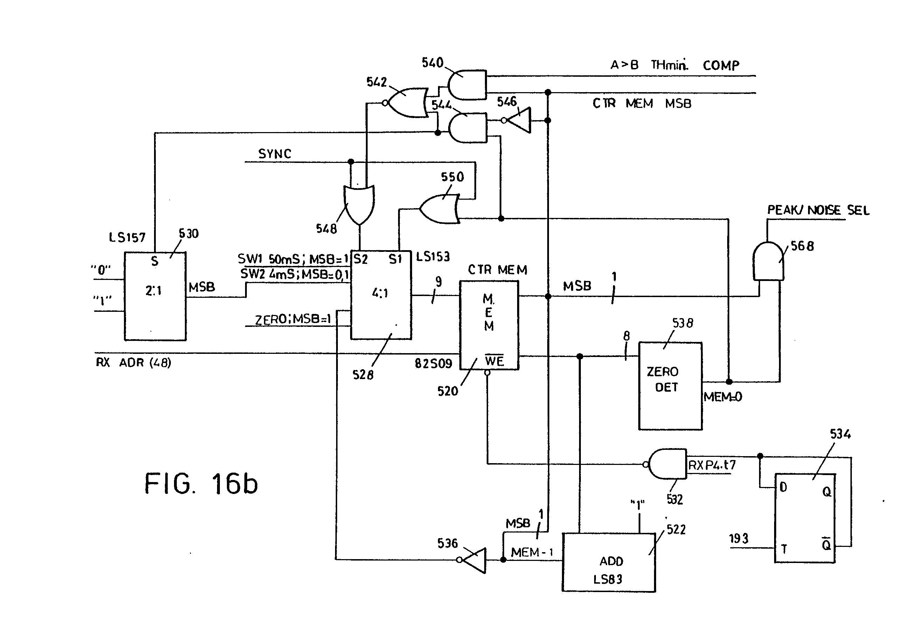

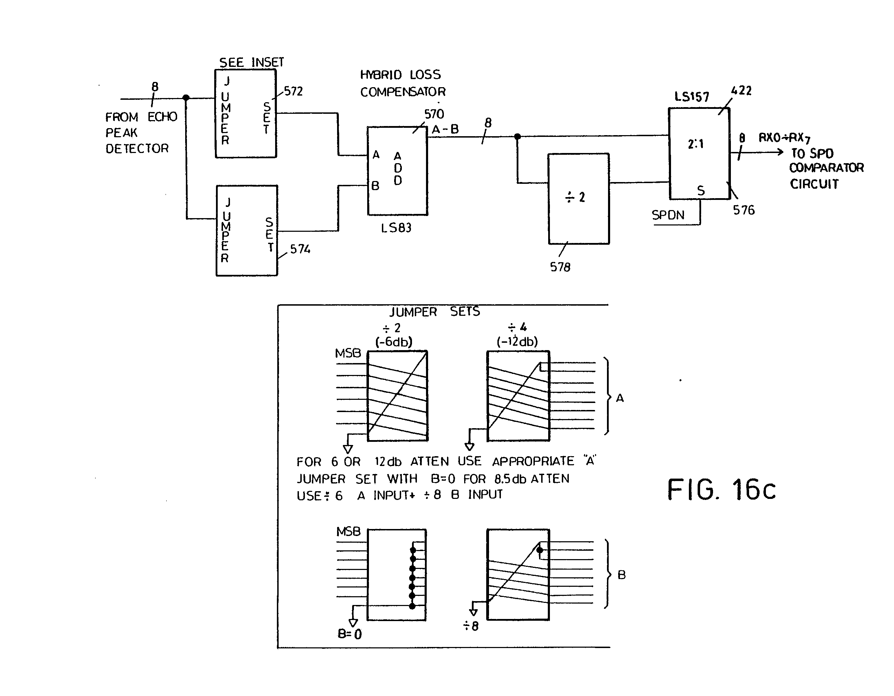

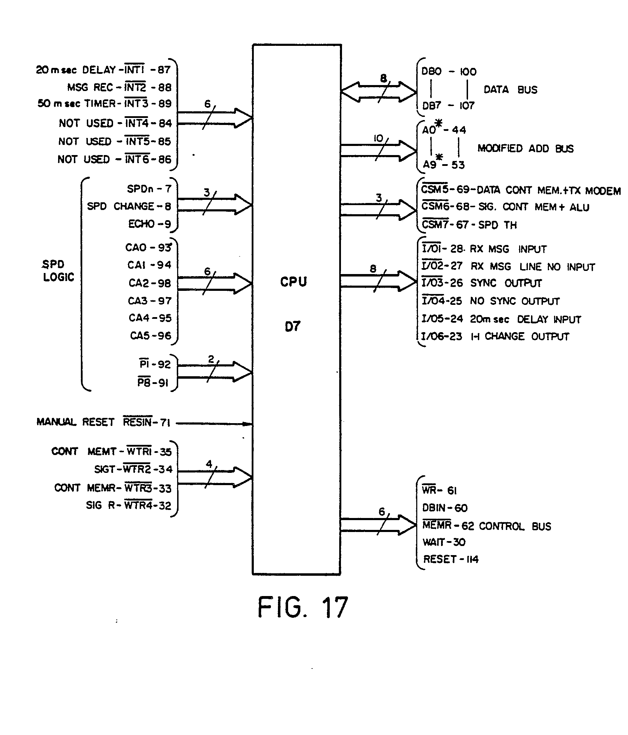

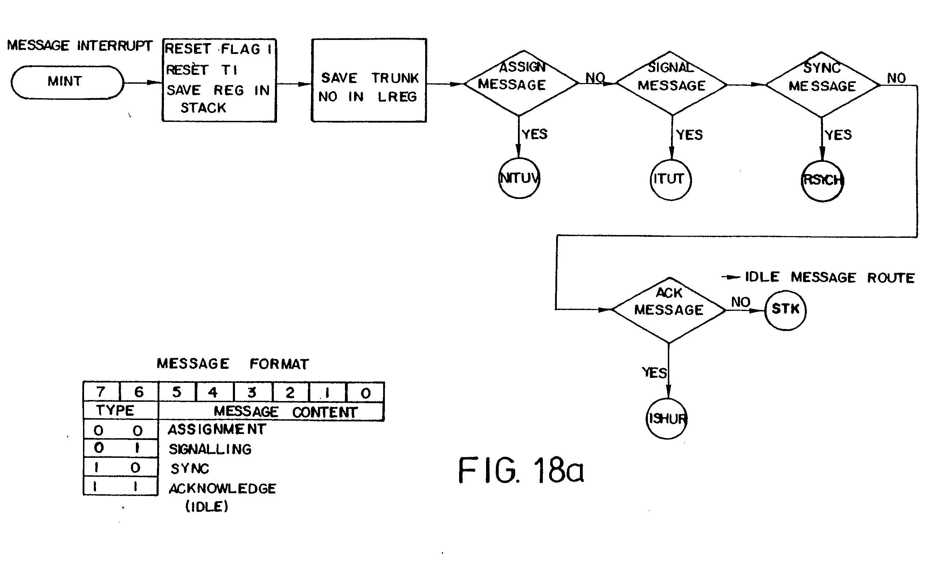

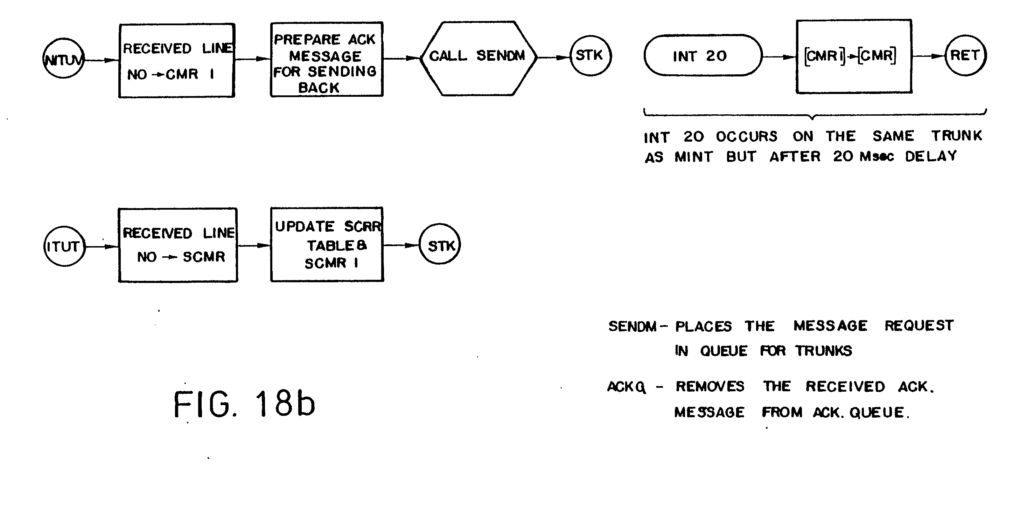

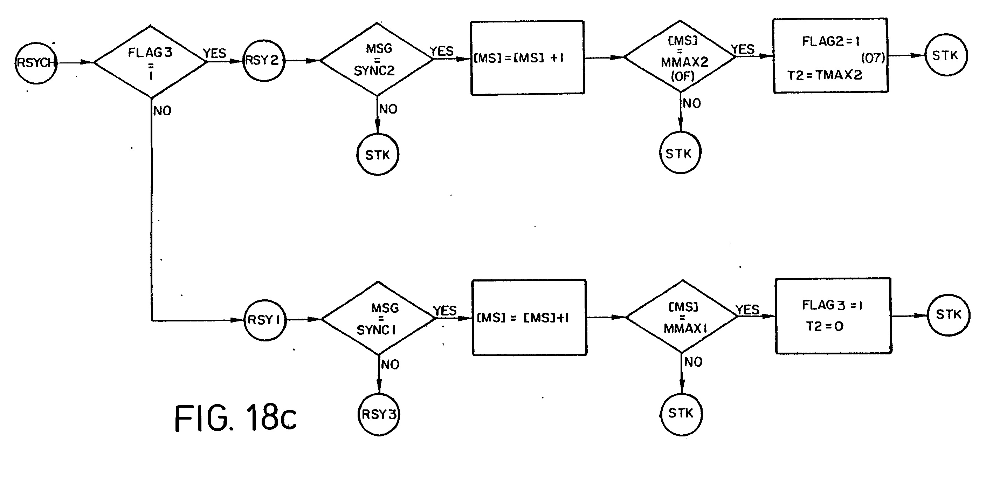

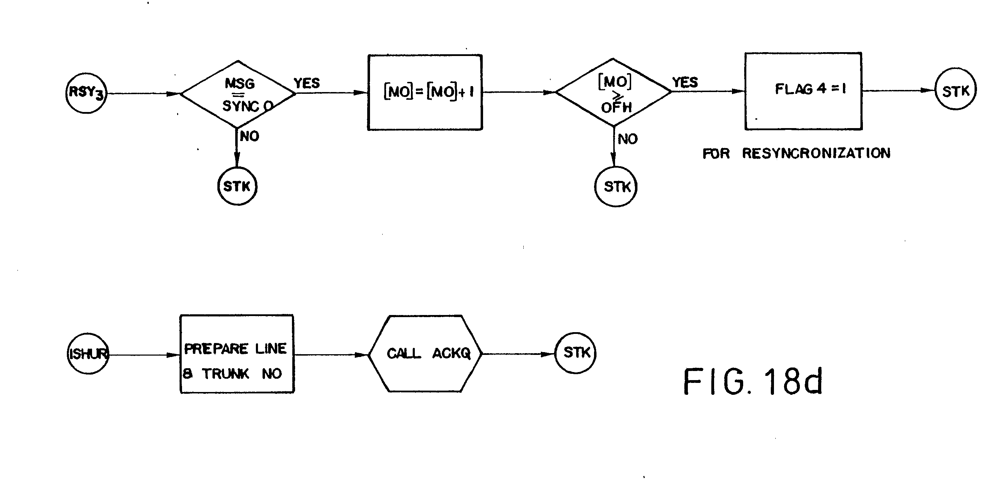

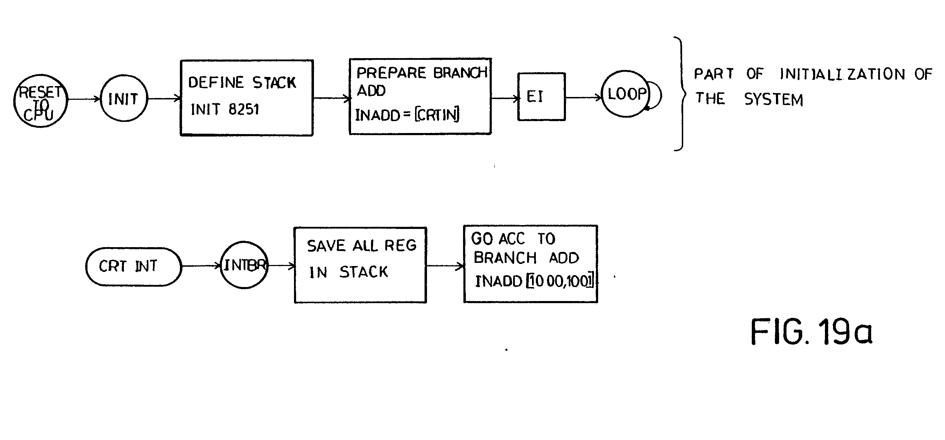

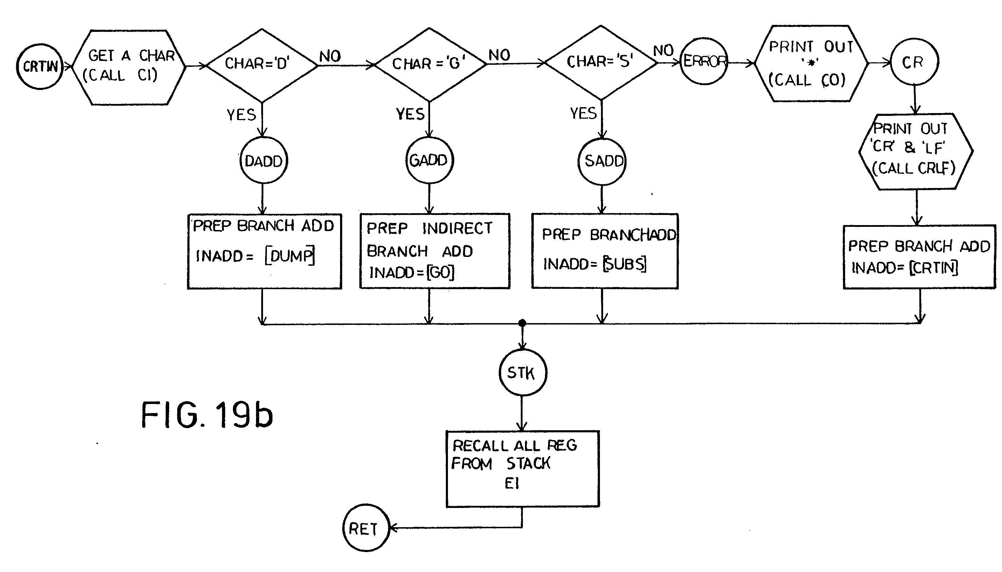

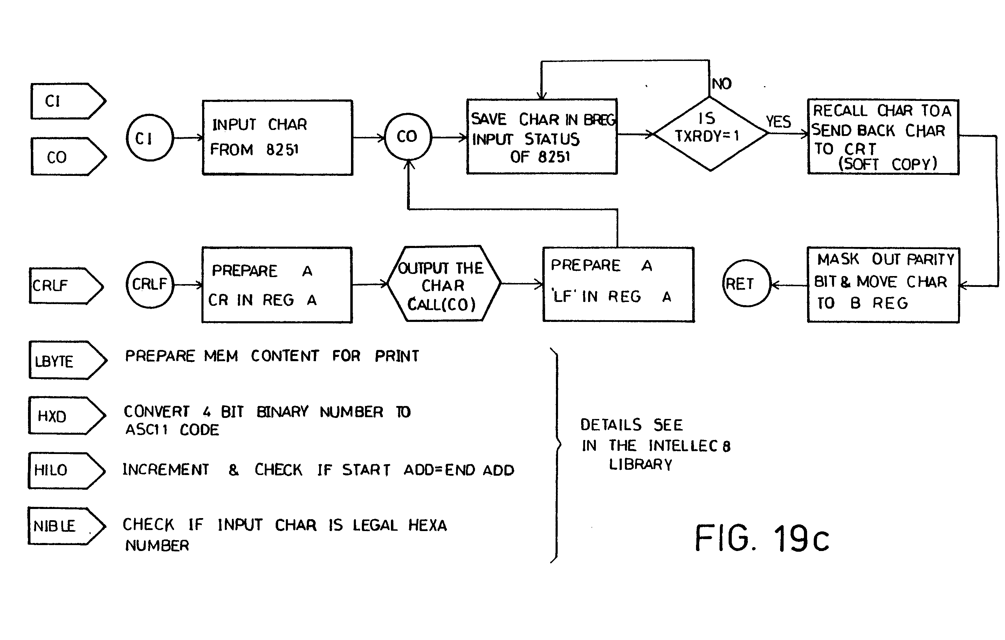

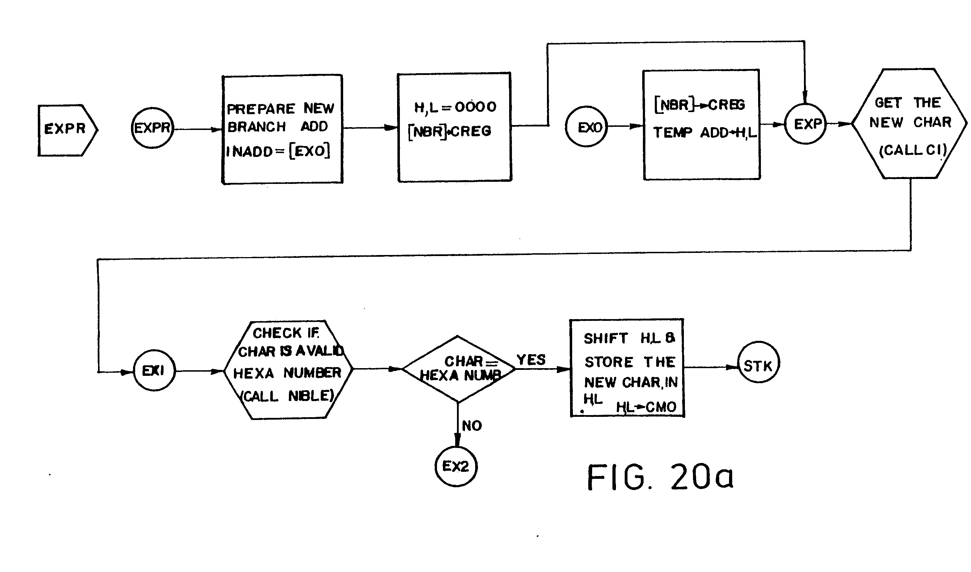

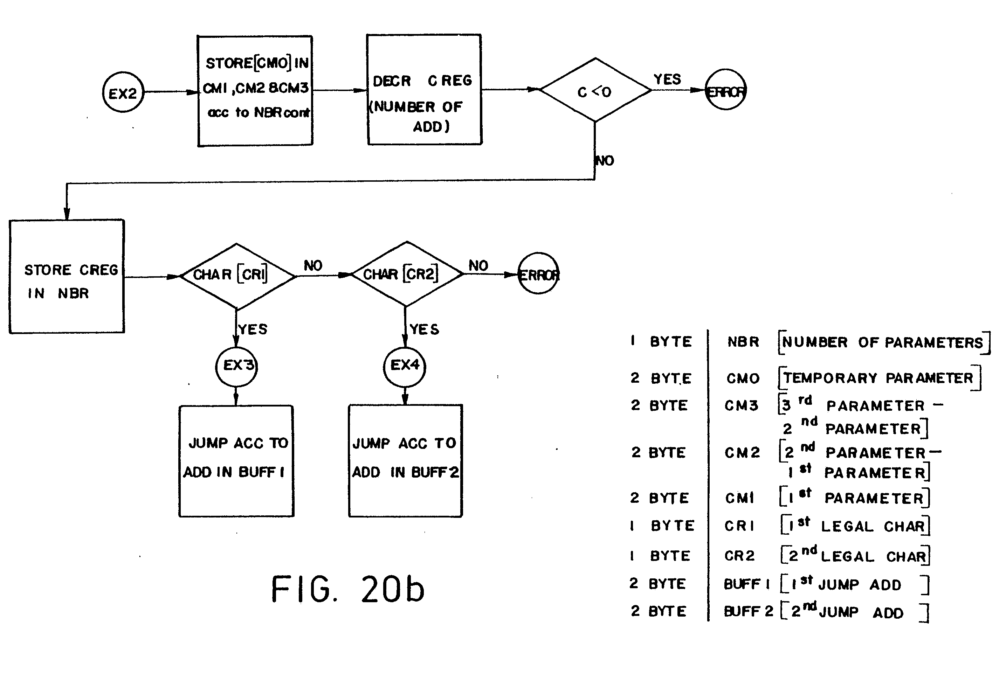

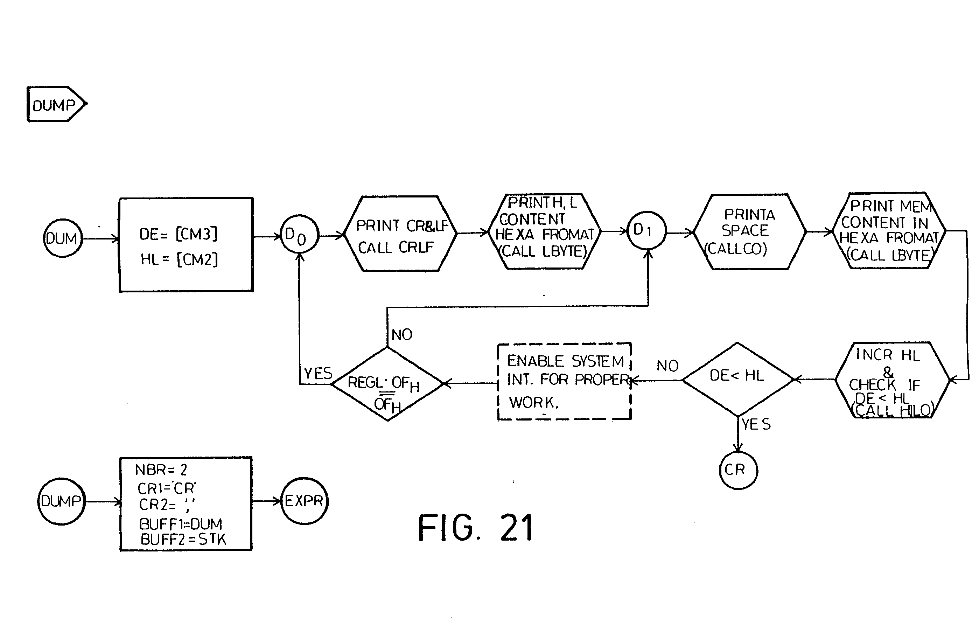

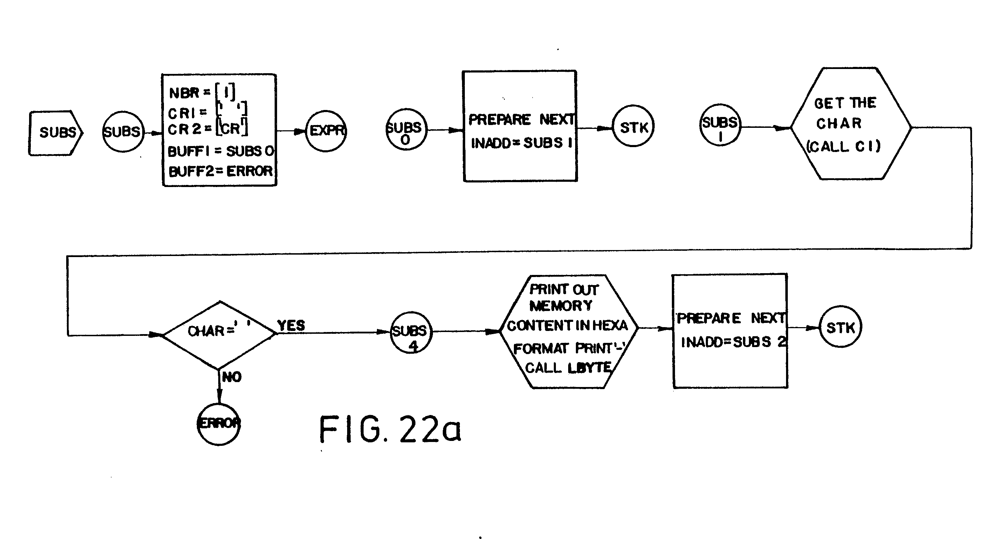

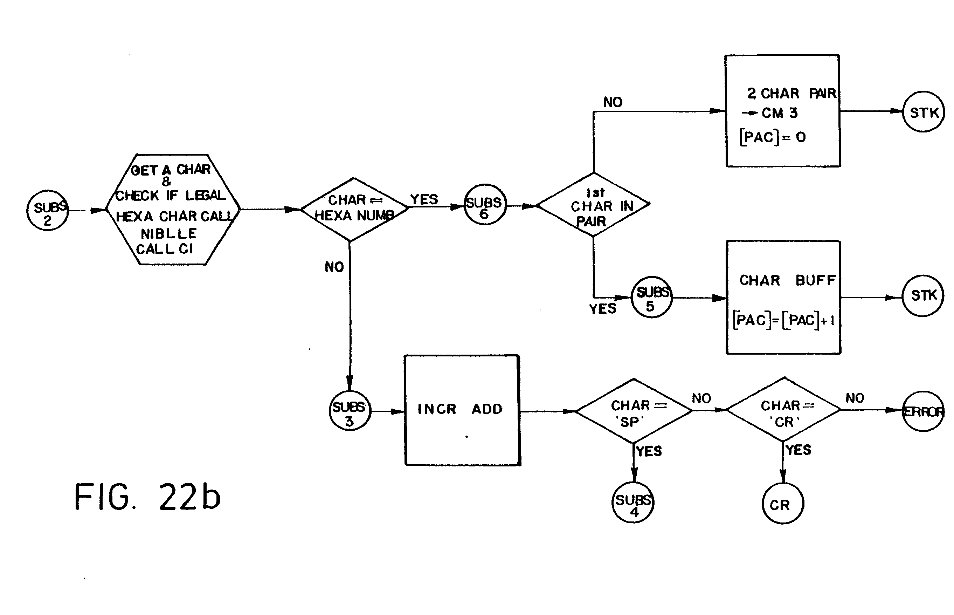

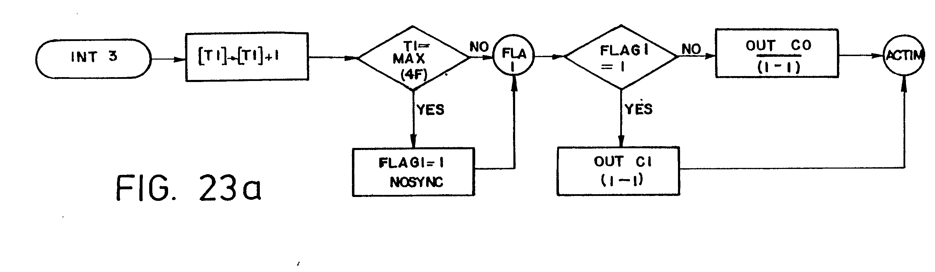

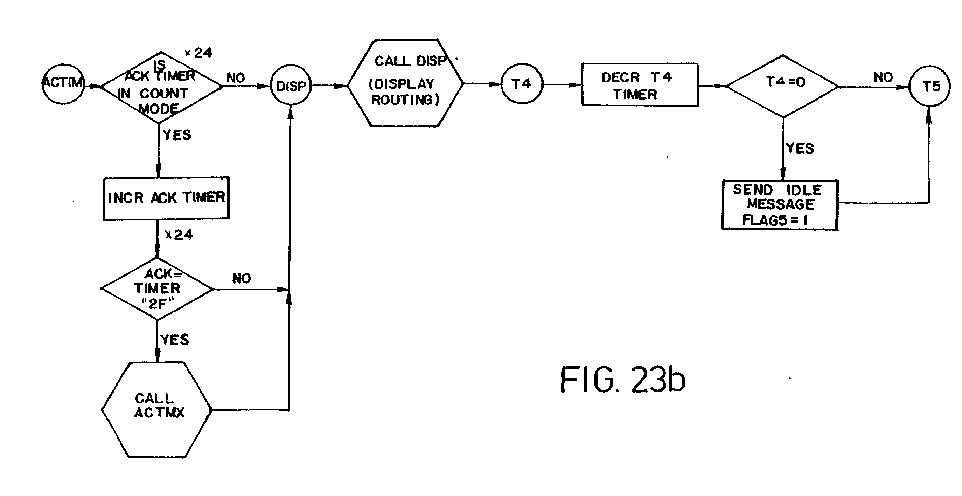

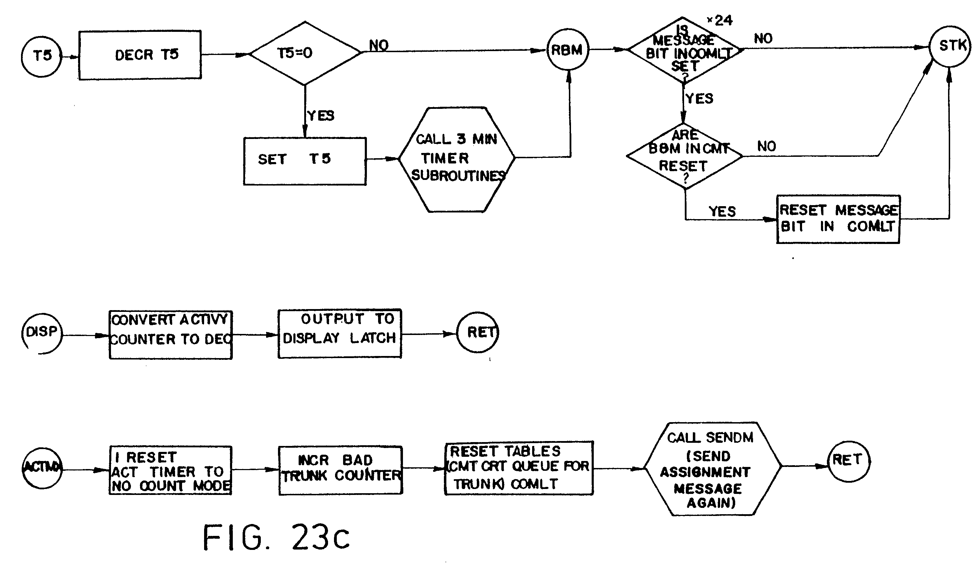

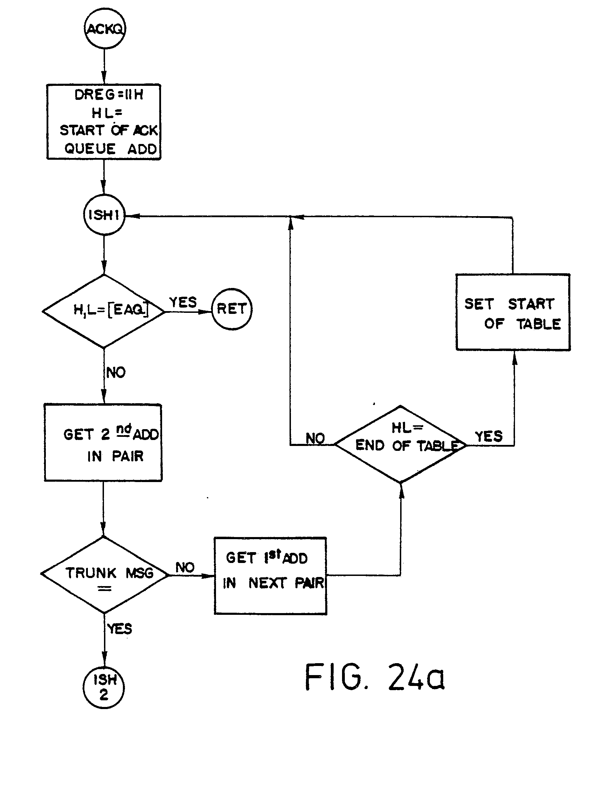

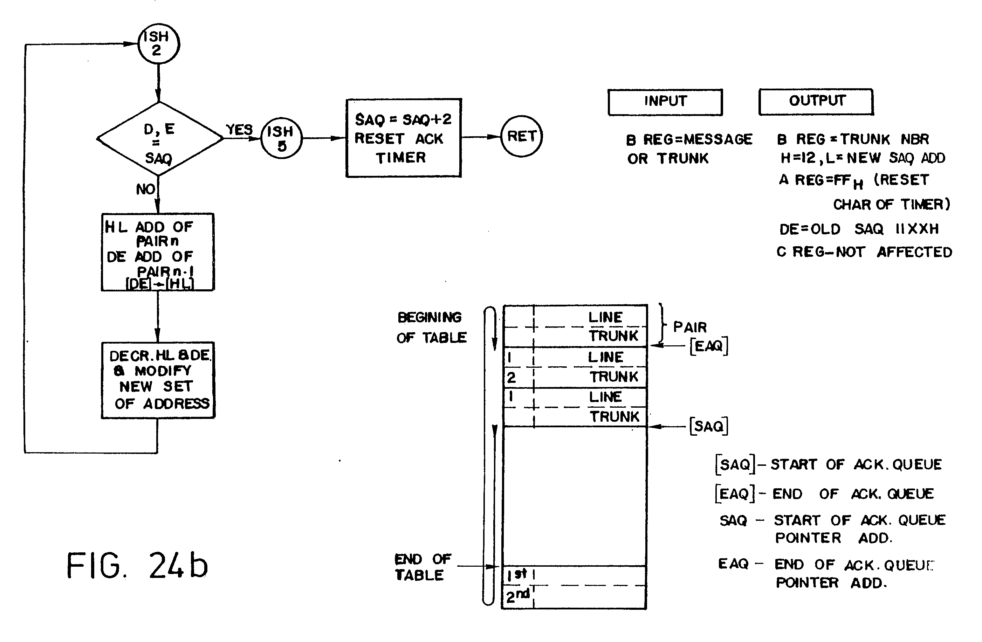

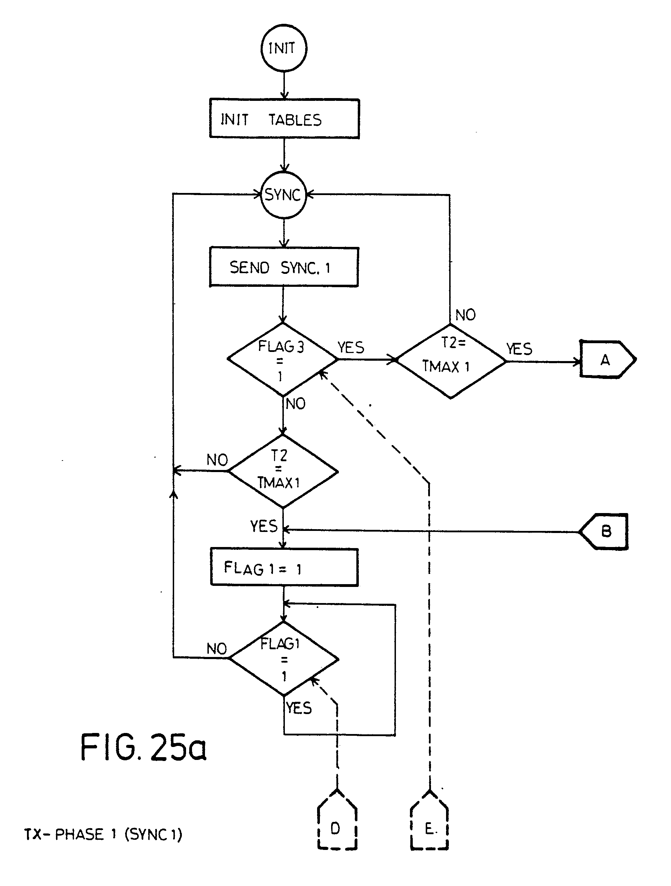

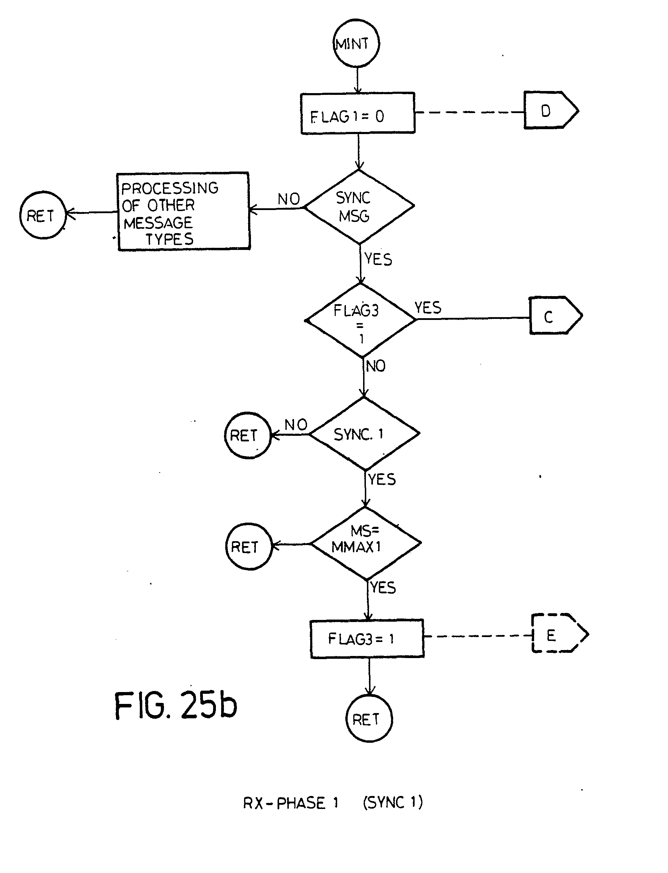

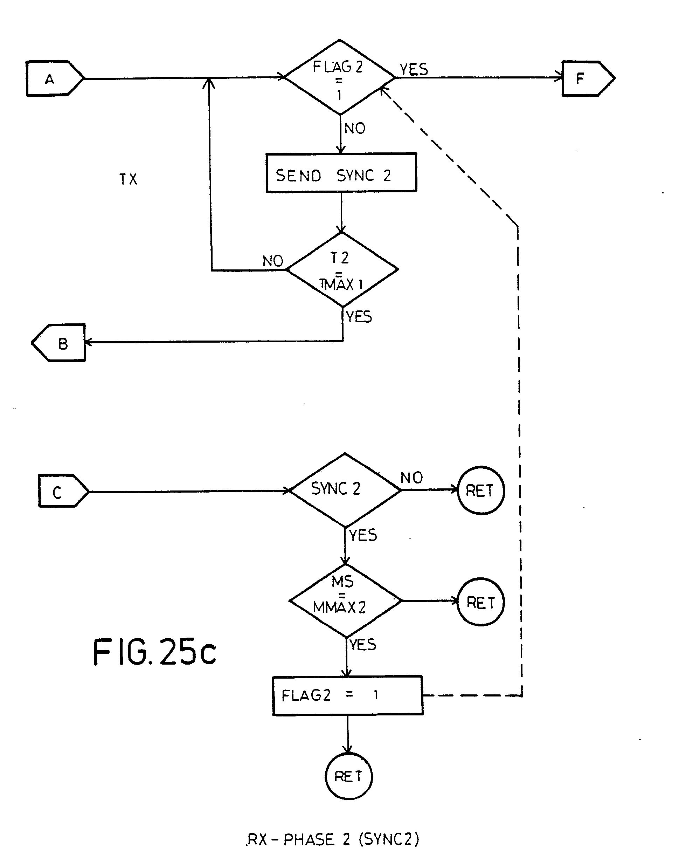

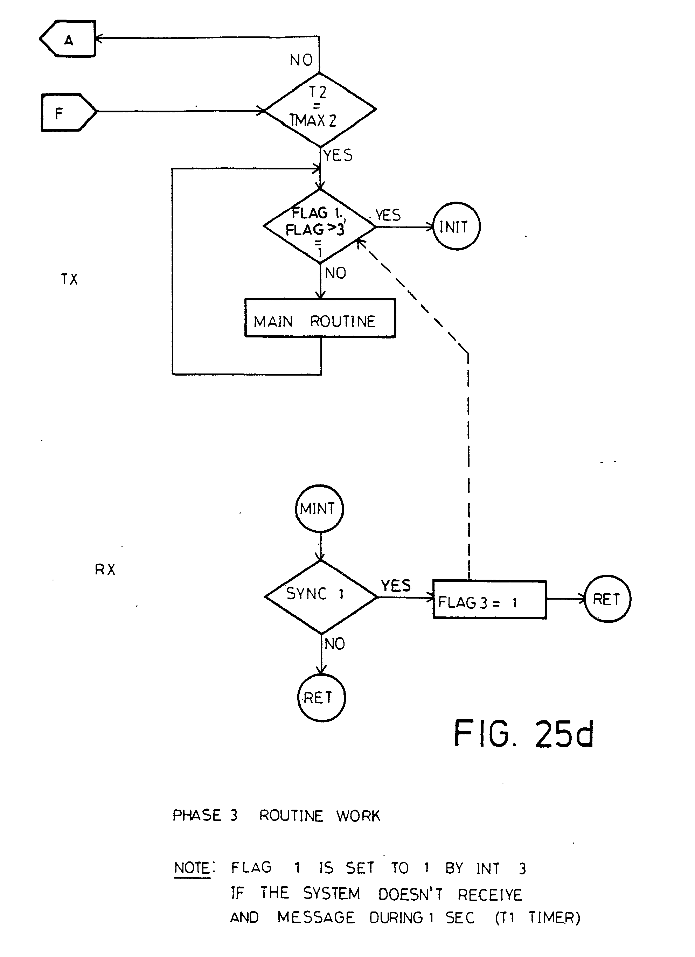

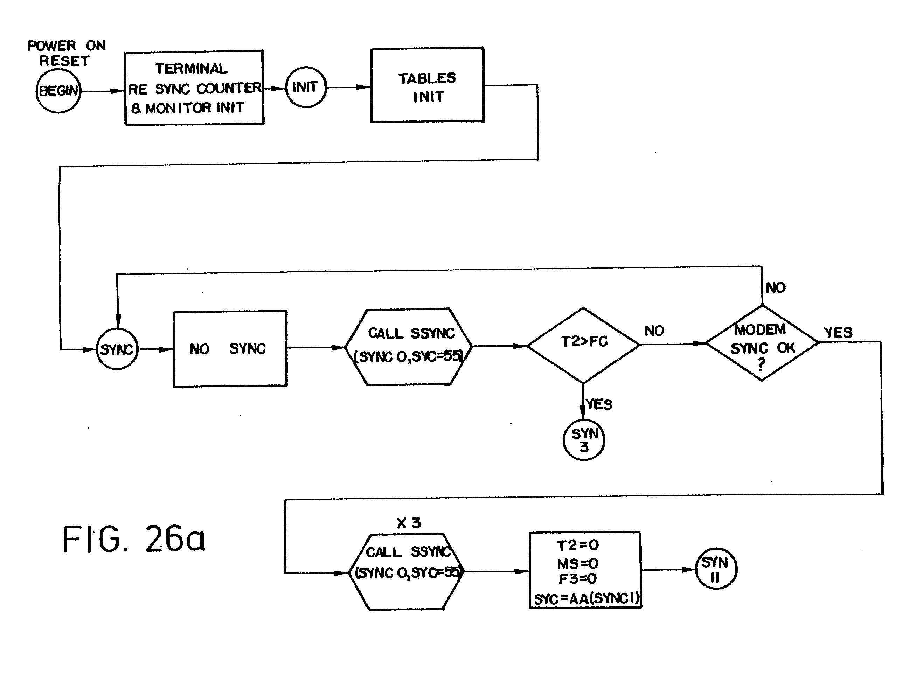

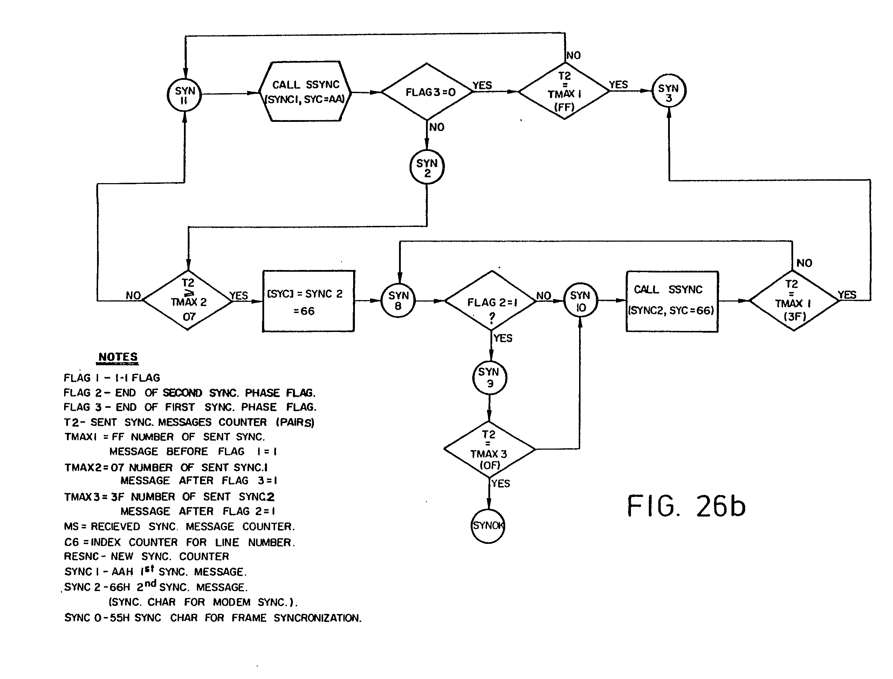

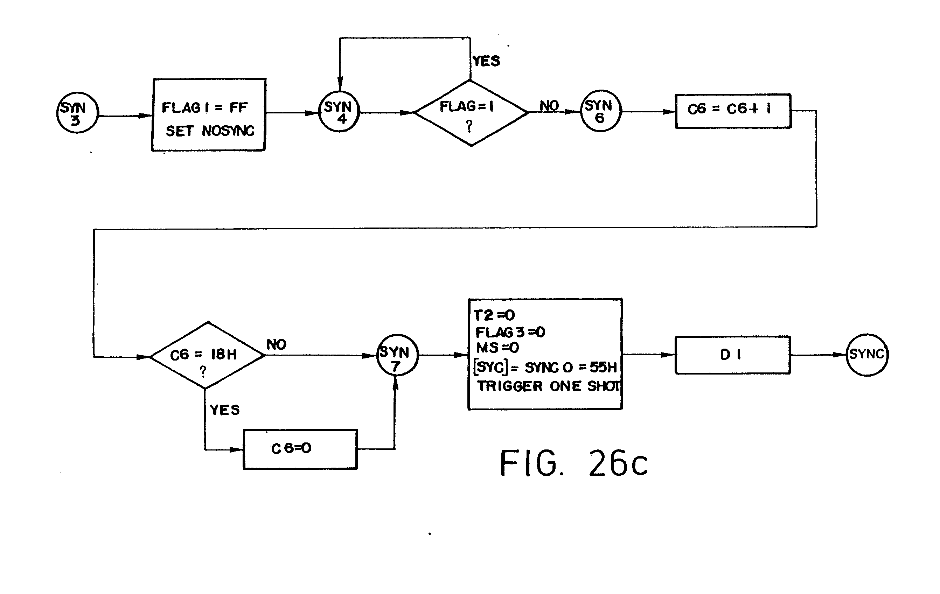

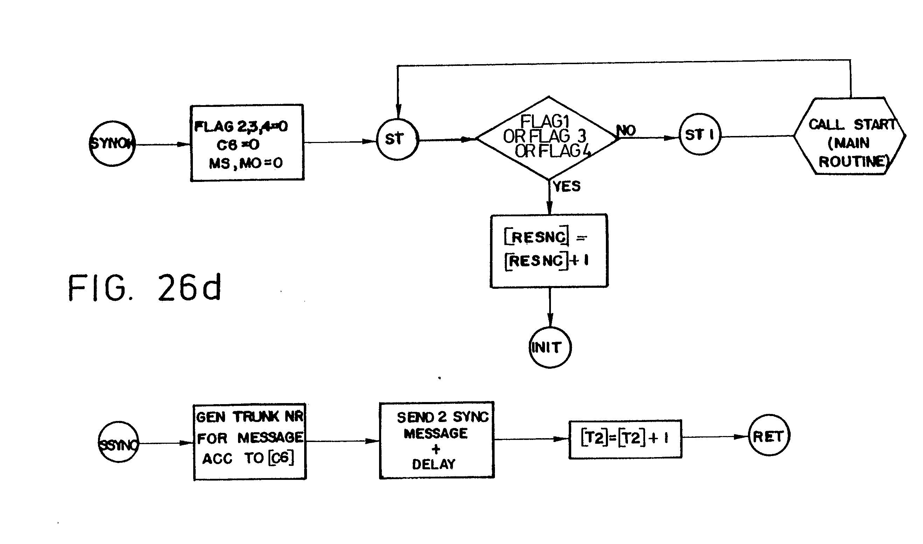

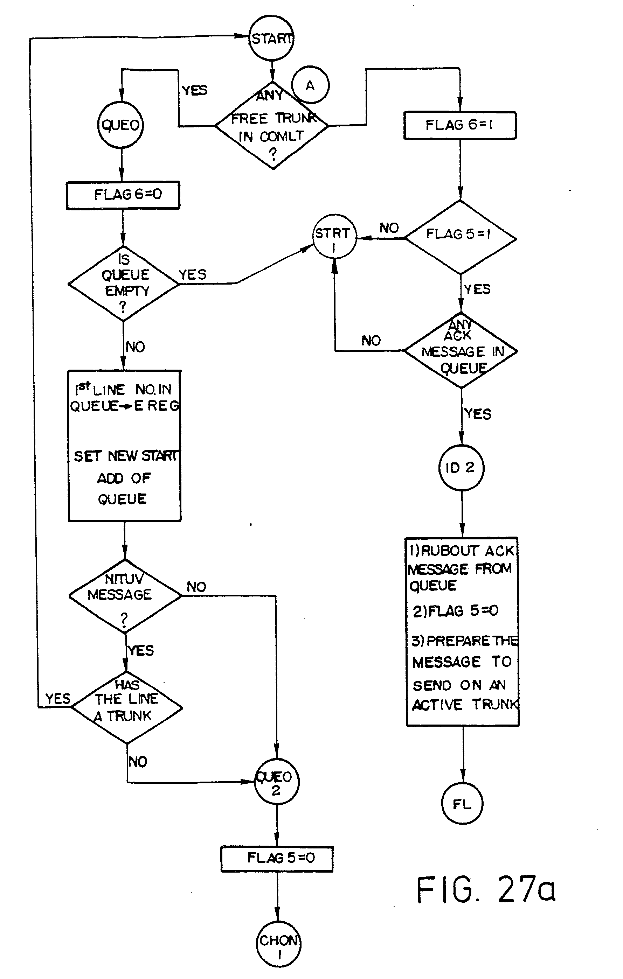

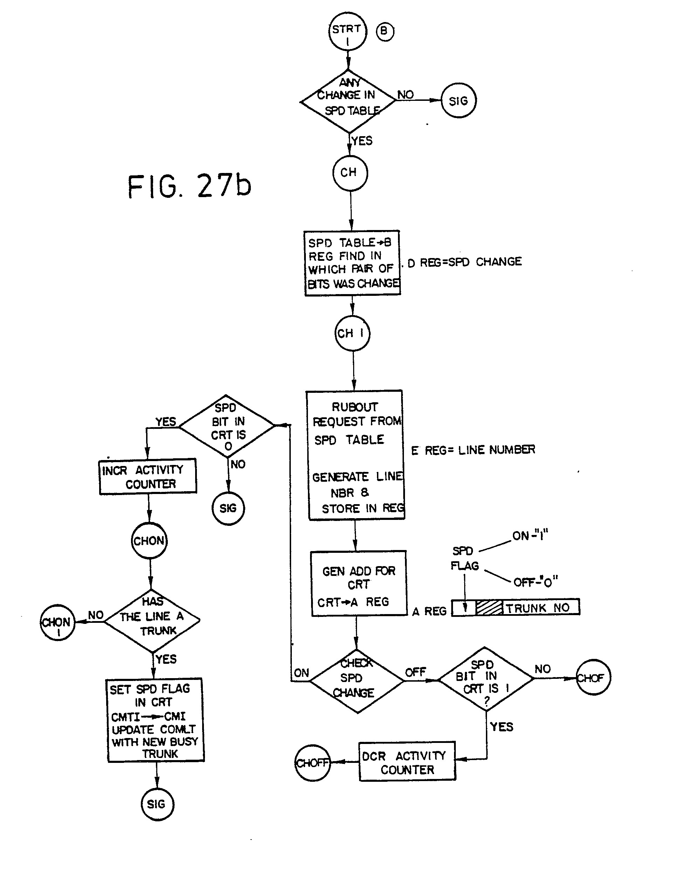

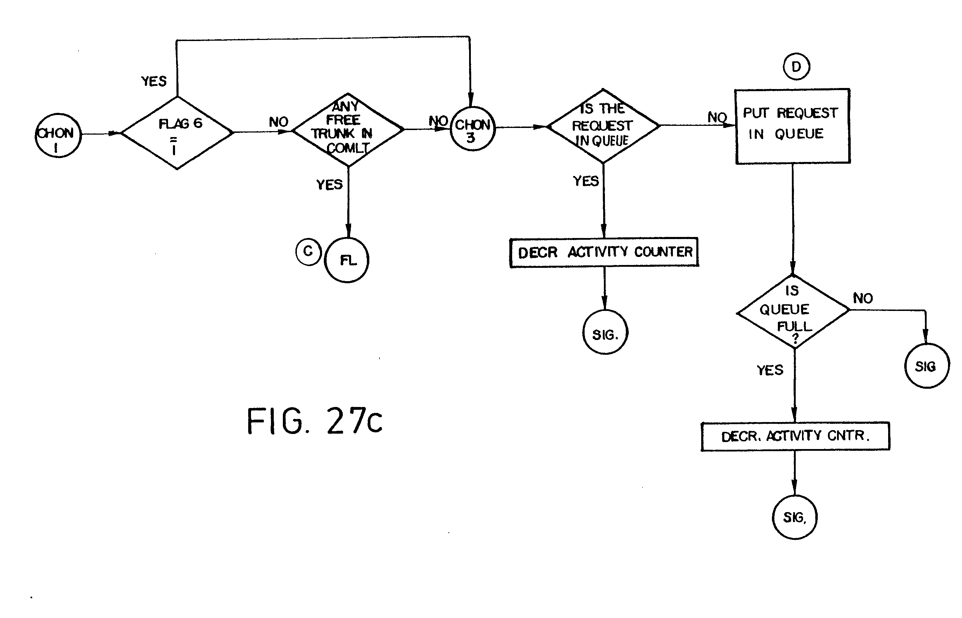

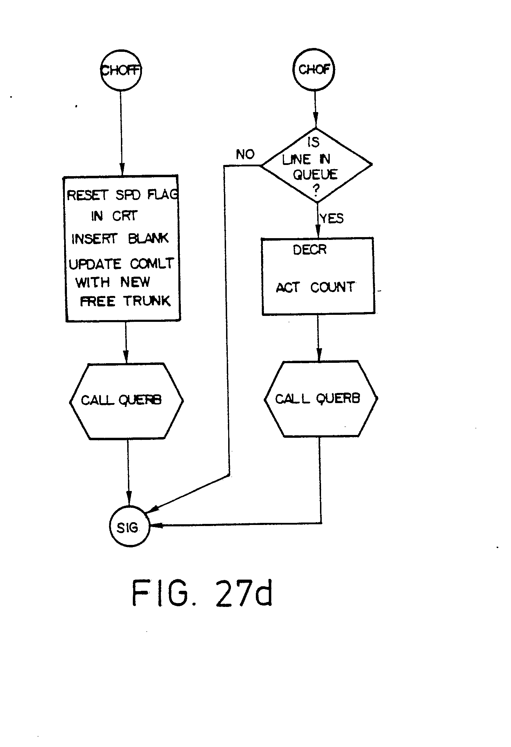

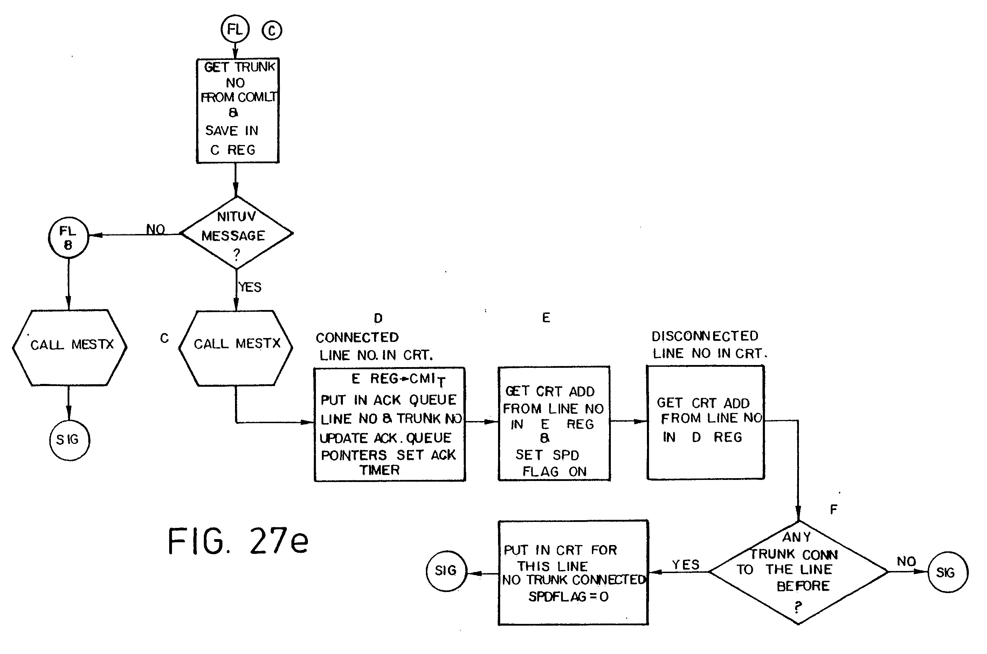

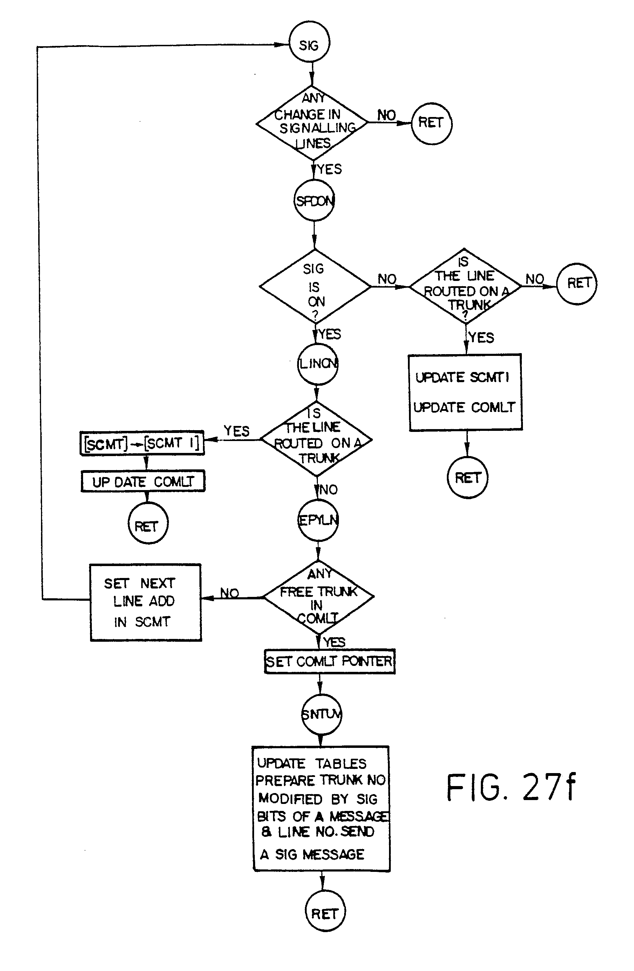

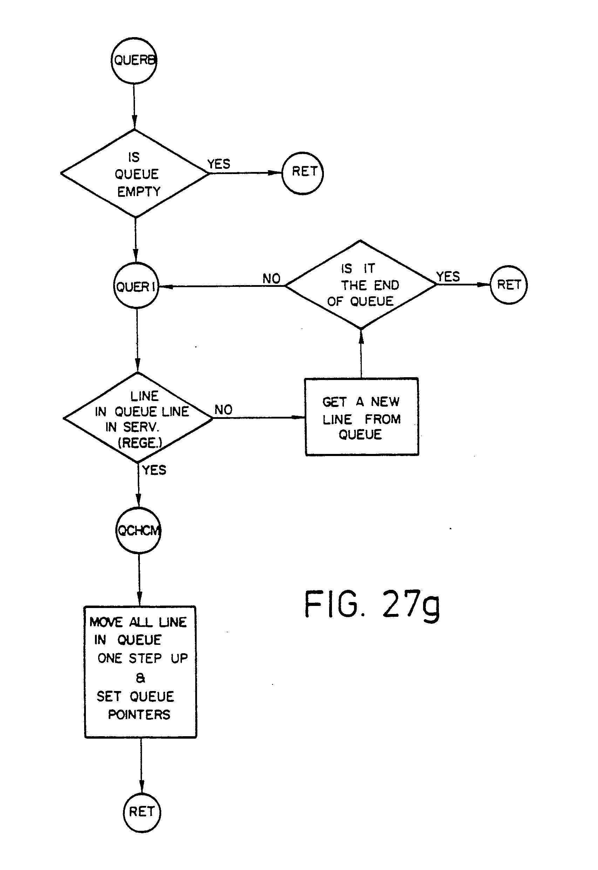

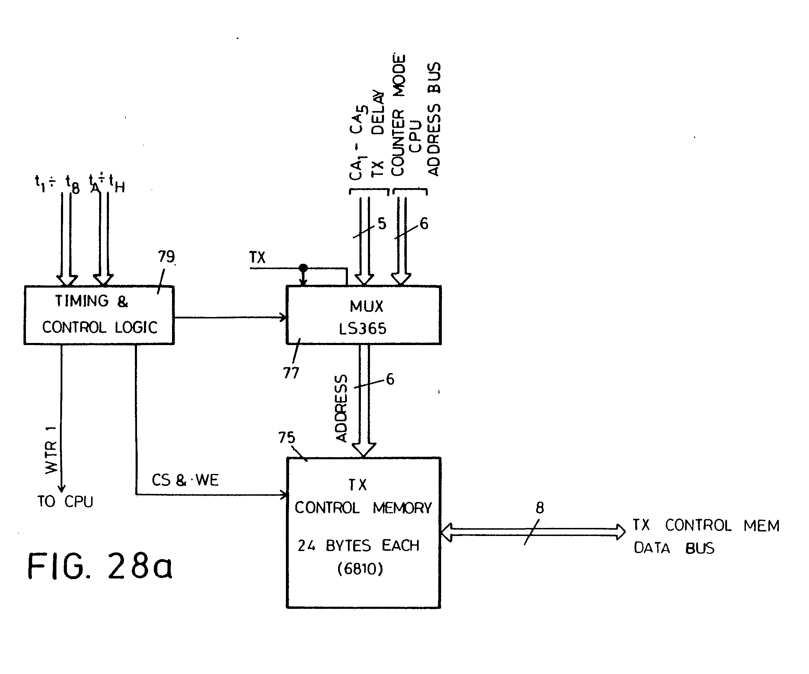

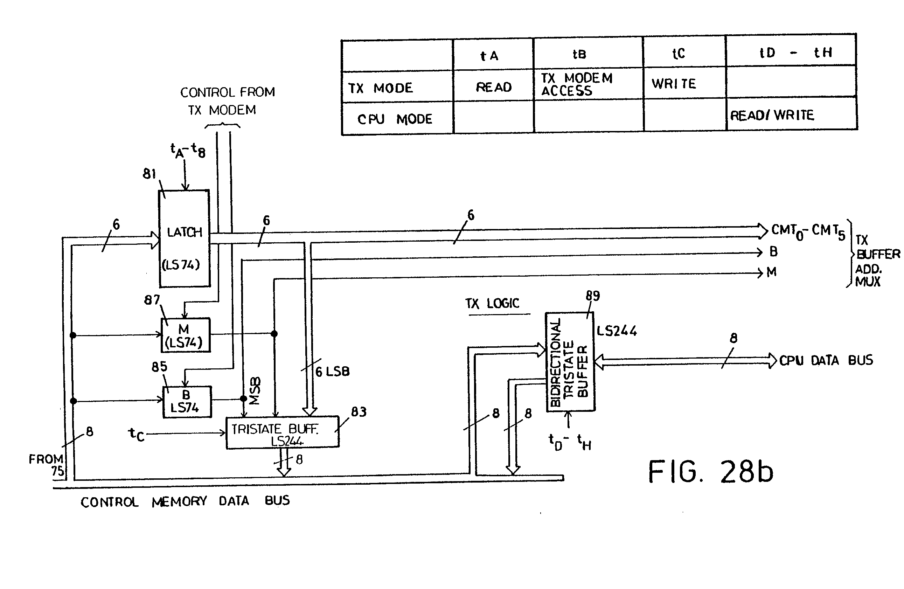

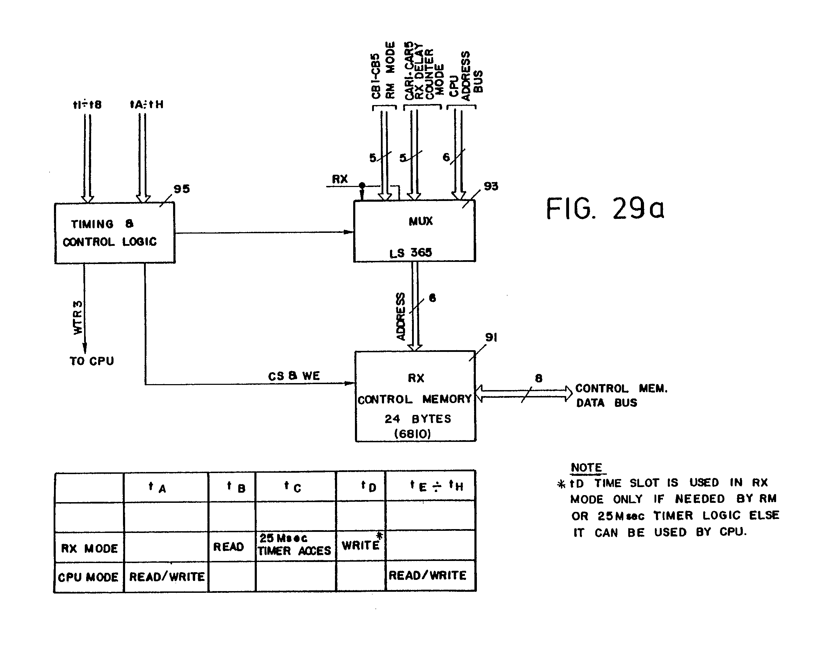

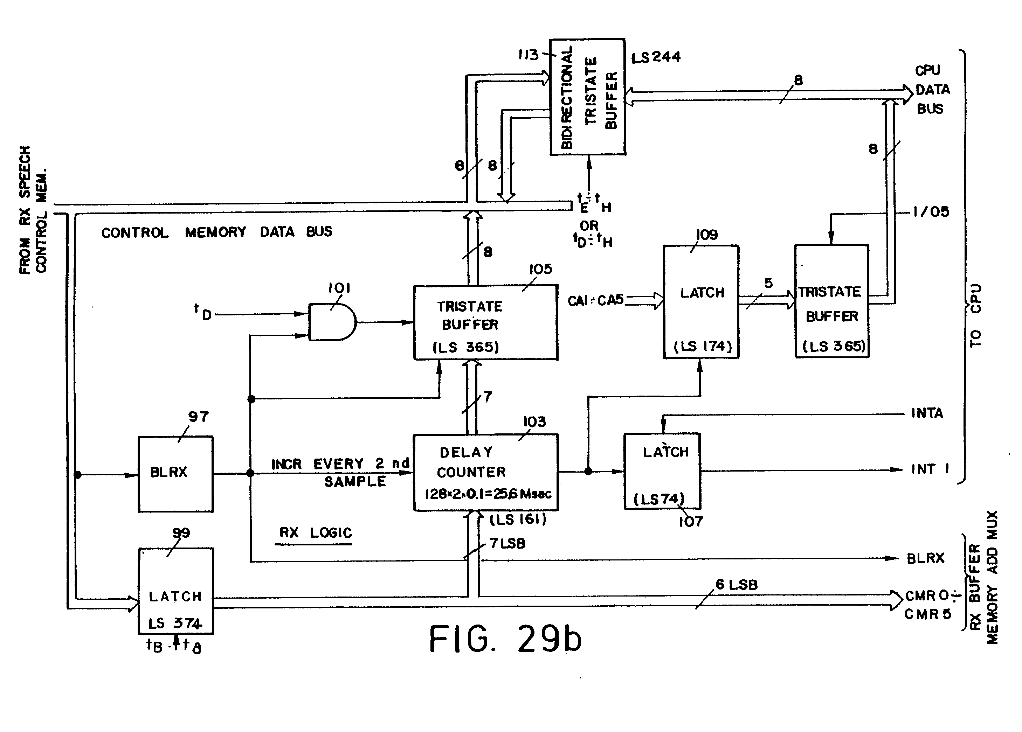

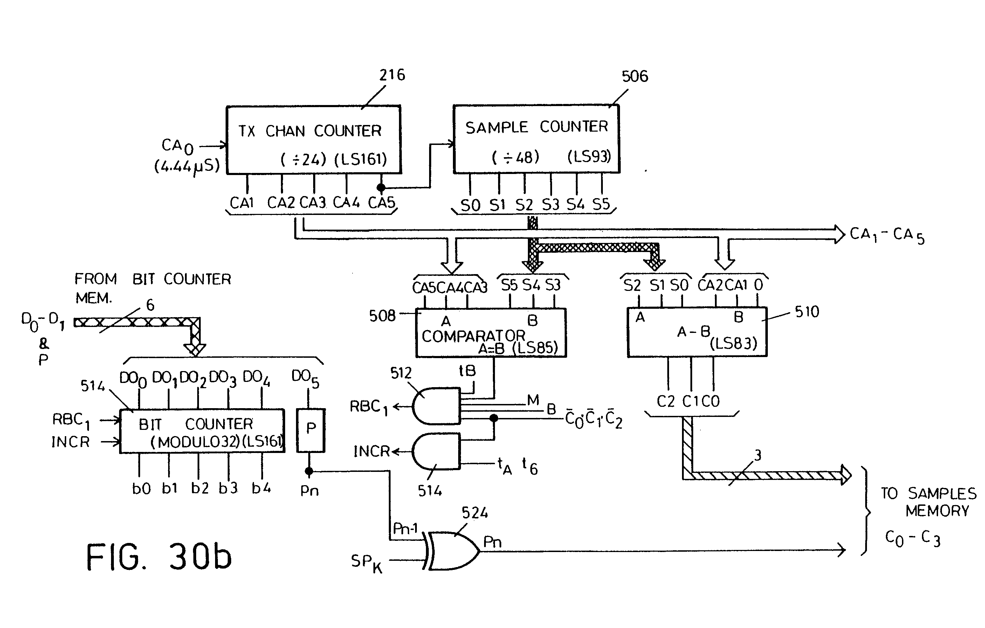

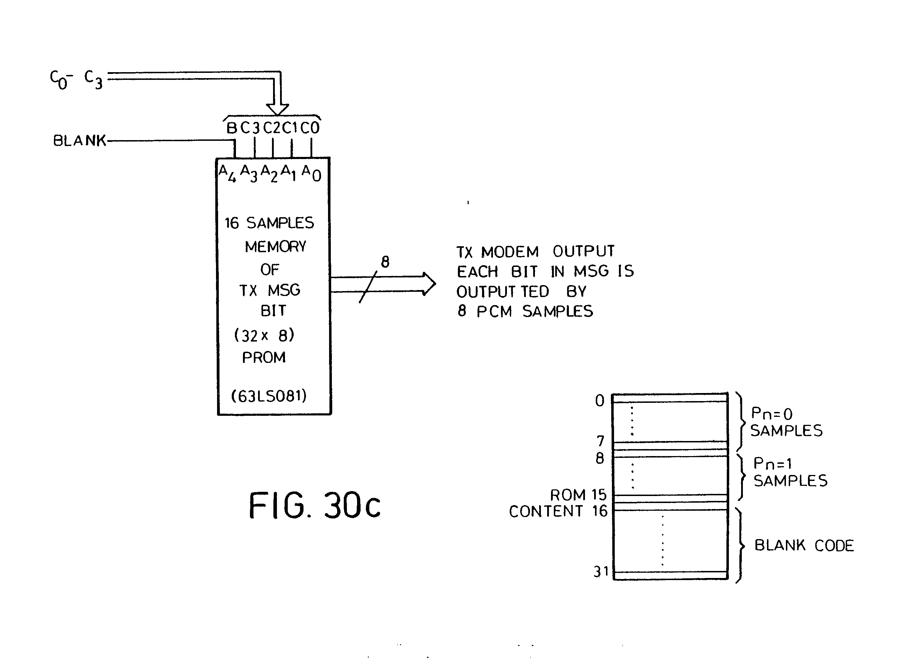

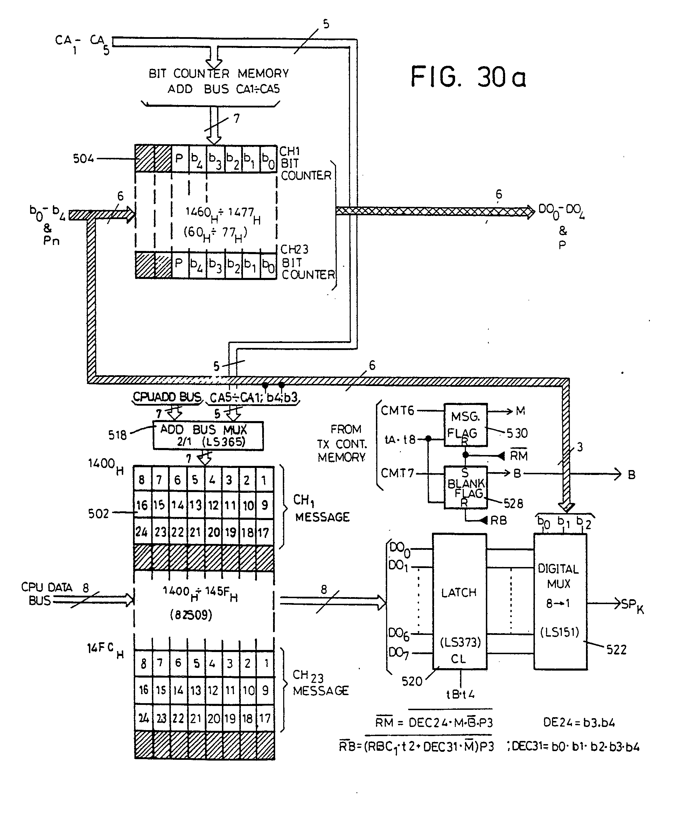

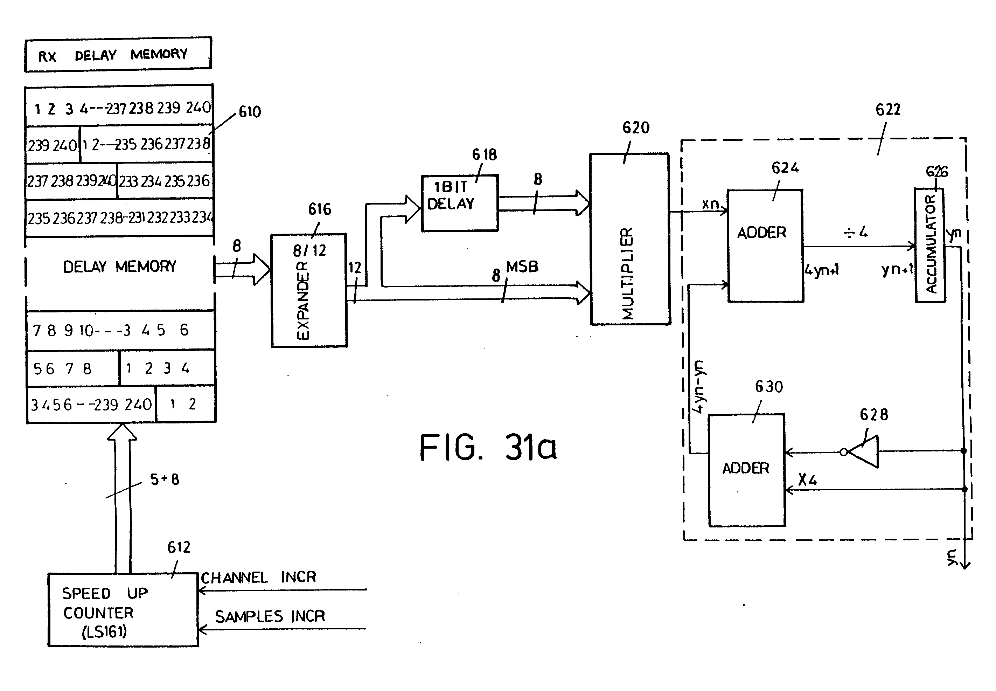

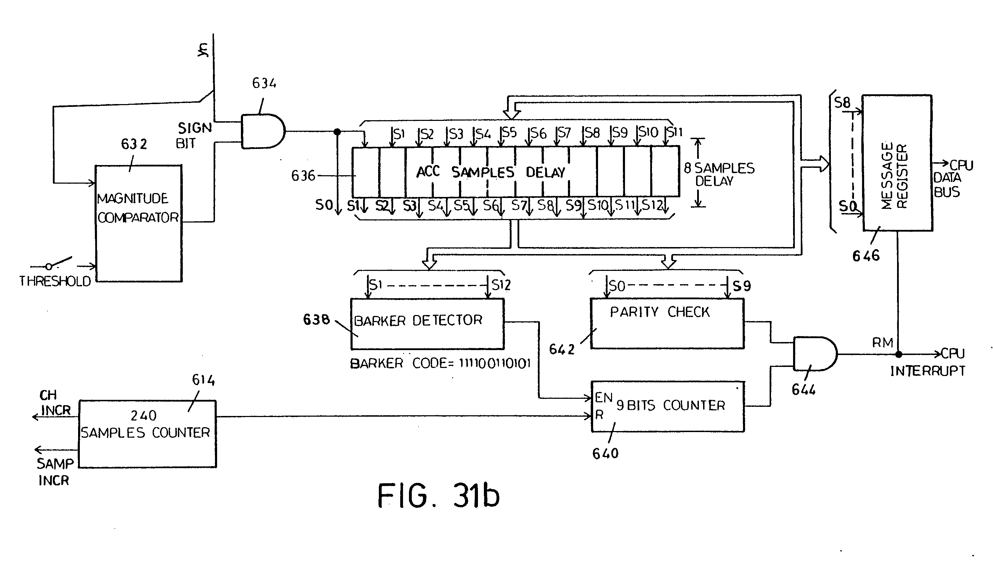

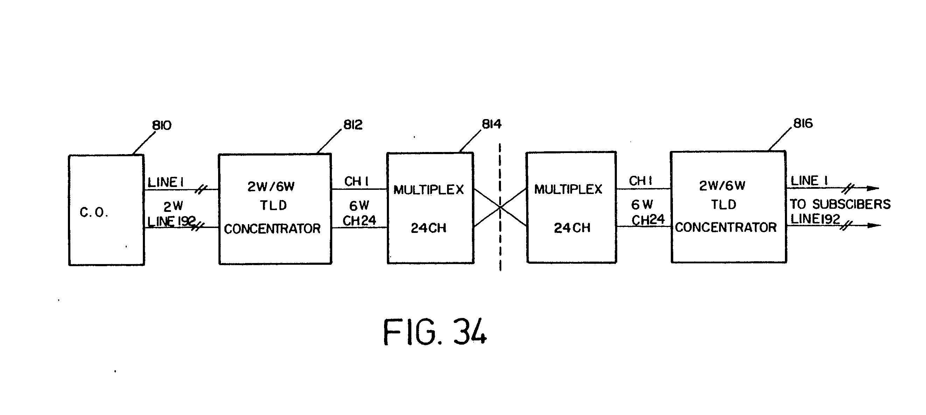

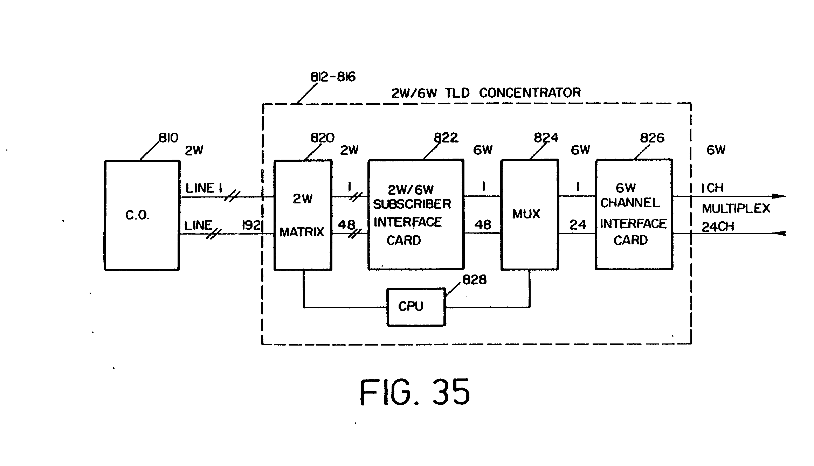

A full description of the telephone system shown in Figs. 1—37 is provided in European Patent Application No. 79301917.5 (Publication No. 25465 A1) from which this application has been divided. That description is to be deemed incorporated herein by reference. The present invention is primarily concerned with said Figs. 2, 9, 12, 32, 33, 36 and 37.

4

Specific reference is now made to Fig. 2 which is a block diagram illustration of the portion of the TASI apparatus which deals with voice transmissions over communication channels.

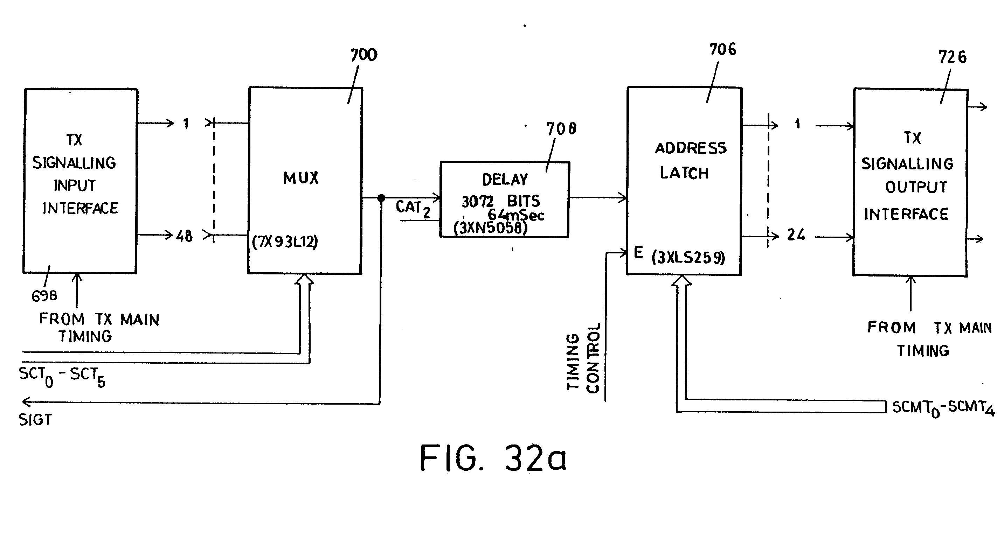

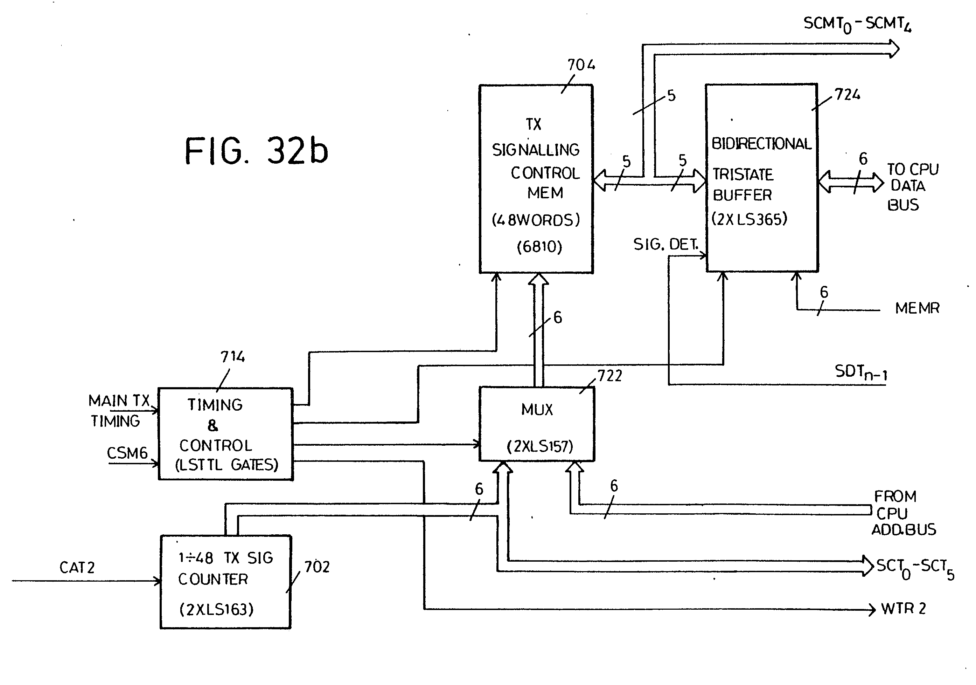

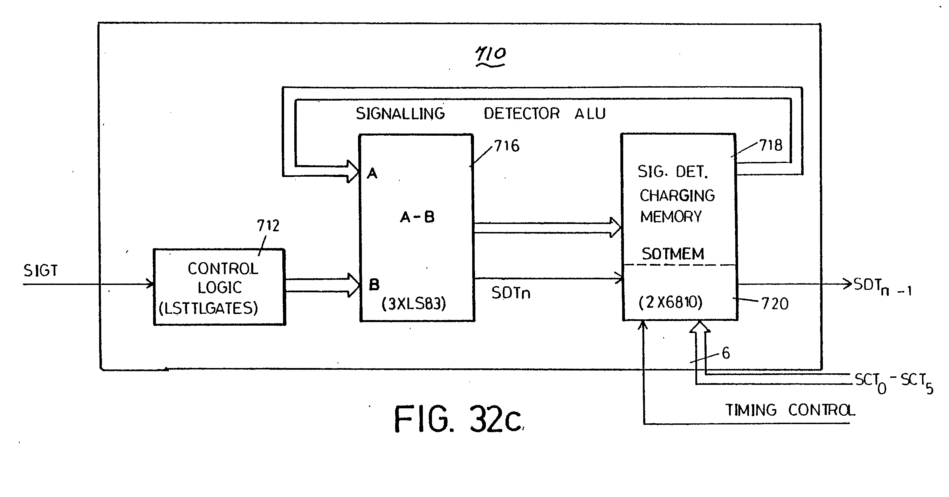

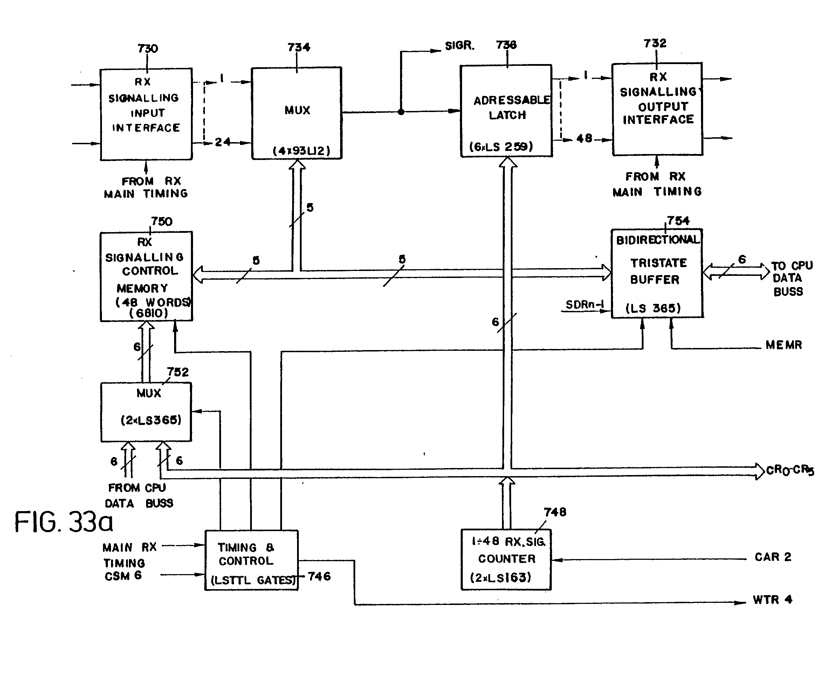

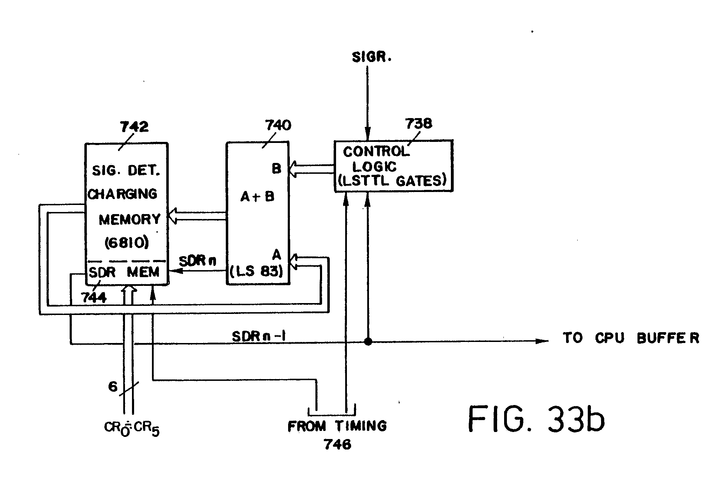

For the purposes of background and definition, it is to be understood that a conventional telephone with out of band signalling is coupled to an exchange normally by two wires. Circuitry in the exchange converts the two wire connection to a six wire connection including two wires for passing dialling and billing information, for example, and four wires, two in each direction for carrying voice or other information. It is appreciated that the six wire telephone connection is used only with out of band signalling. In band signalling requires only a four wire connection which carries only audio signals. The apparatus illustrated in Fig. 2 receives only the four voice connections. The signalling channels are dealt with by apparatus illustrated in block diagram form in Figs. 32 and 33.

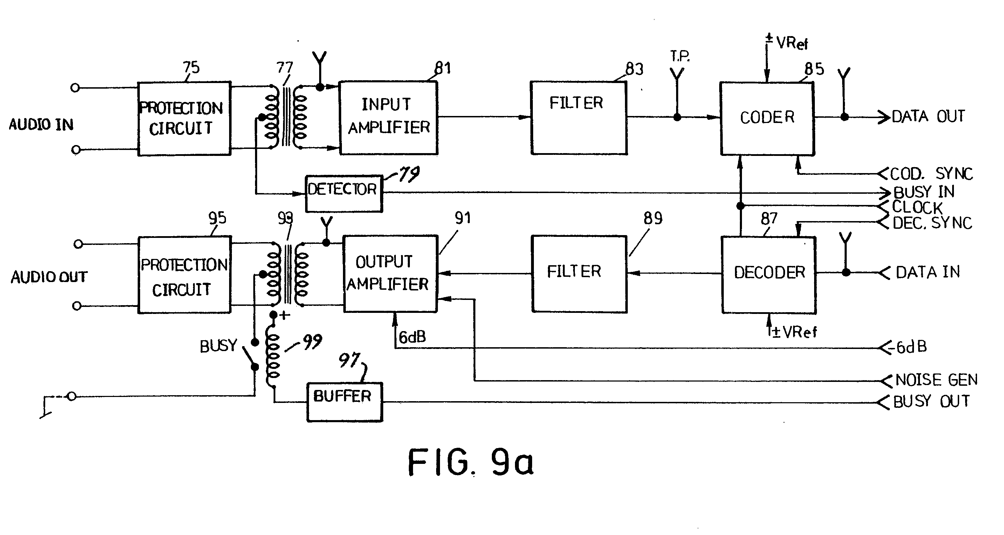

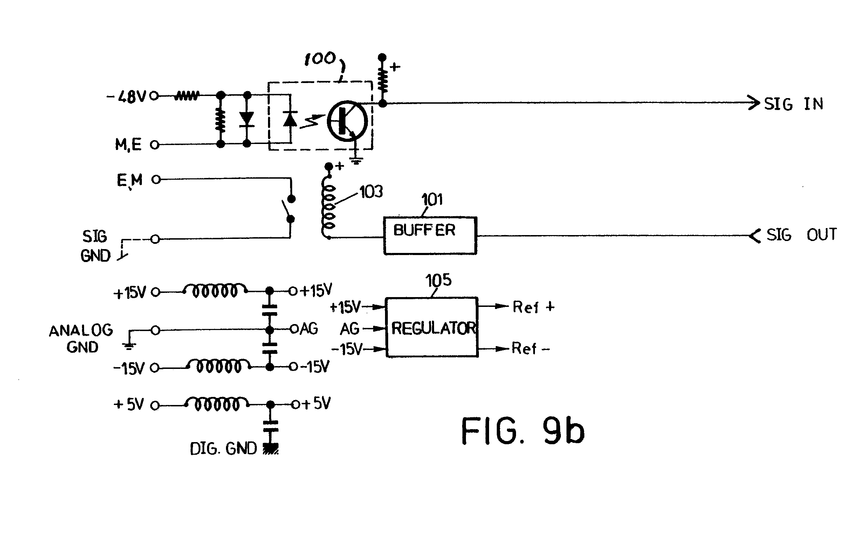

As apparent from Fig. 9, out of band signalling input signals M or E are supplied via an optocoupler 100 to an input of the signalling circuitry. A buffer 101 receives a signalling output from the signalling circuitry and drives relay 103 which when activated transmits an E or M signal. A regulator 105 supplies reference voltages for the coder and decoder.

Reference is now made to Fig. 32 which illustrates in block diagram form apparatus for treatment of out of band signalling in accordance with the embodiment of the invention here described. The apparatus shown here and in Fig. 33 is combined with the apparatus of Fig. 2 when out of band signalling is involved.

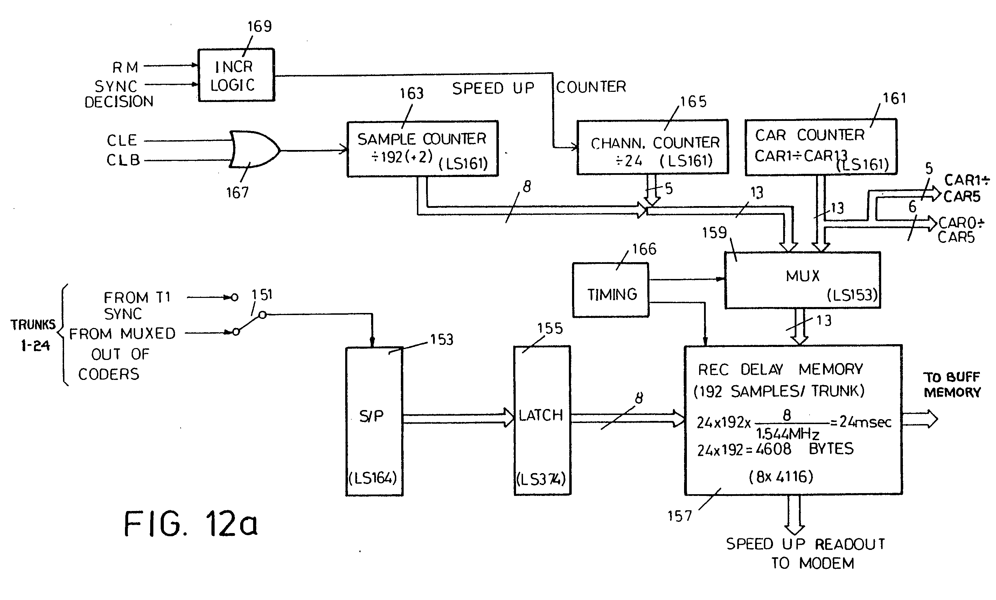

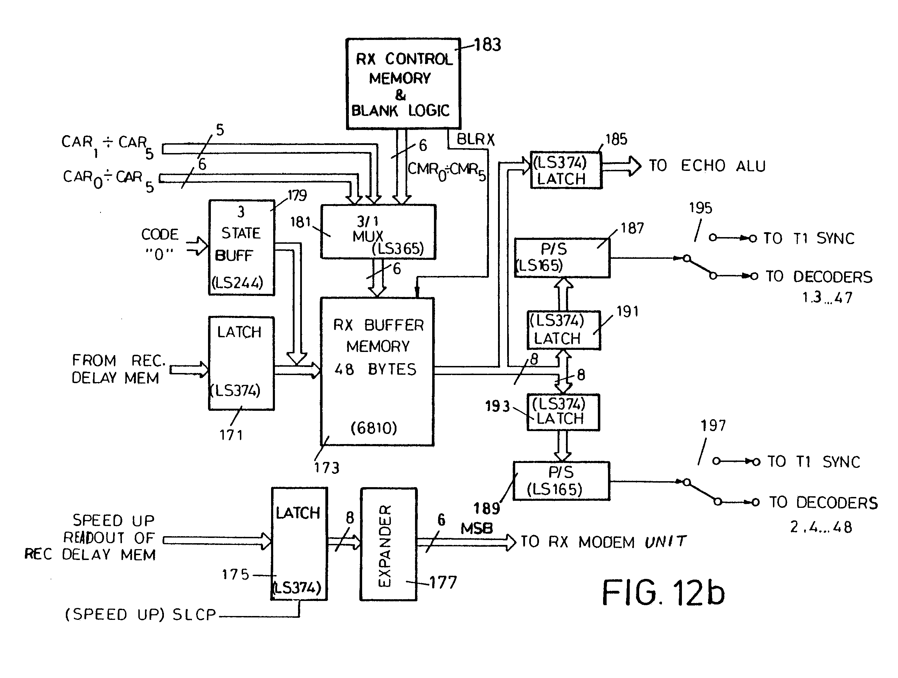

A transmission signalling input interface 698, which may be the same for example as the interface circuitry described above in connection with Fig. 12 provides 48 parallel signalling inputs, each corresponding to a telephone communication line to a 48 to 1 multiplexer 700 which may comprise 7 93L12 chips. The multiplexer is controlled by a 48 counter 702, which may comprise 2 LS—163 chips and which also controls a signalling control memory 704 such as a 6810 which governs the operation of an addressable latch 706, which may comprise 3 LS259 chips, operating as a 1 to 24 demultiplexer.

Thus during a given time slot, one of 48, multiplexer 700 couples a predetermined one of the 48 telephone communication line signalling wires to the signalling wire of a communication channel determined by the control memory 704.

A delay memory 708, typically 3 N—5058 static shift registers, is interposed between the output of multiplexer 700 and the input of addressable latch 706 in order to provide a delay (typically 64 milliseconds) which is sufficient to enable signalling detection circuitry 710 to determine whether signalling information is present and if so to effect assignment of a signalling wire corresponding to a communication channel to be assigned to the signalling wire carrying signalling information.

The output of multiplexer 700 is supplied to signalling detection circuitry 710, also referred to as signalling detector ALU circuitry, at the input of control logic circuitry 712, comprising TTL gates. The control logic receives timing signals from timing and control circuitry 714 and also receives an STD n-1 input which indicates the previous status of the given telephone communication line switching wire. The output of control logic circuitry 712 is supplied to the negative input of a subtractor 716, typically 3 LS 83 chips and which provides an output to a signal detection charging memory 718 which together with a S.D.T. memory 720 comprises 2 6810 chips. The output of memory 718 is supplied to the positive input of subtractor 716. The S.D.T. memory receives an input from logic circuitry 712 which indicates whether the current sample contains signalling information, based on the criteria established by the control logic circuitry.

It may be appreciated that the signalling detection circuitry 710 provides integration of the input samples so as to establish a minimum threshold for duration and also to provide hangover time after termination in order to prevent loss of signalling information.

The control memory 704 operates in two modes in response to timing signals from circuitry 714. As described above, it outputs to addressable latch 706 in response to inputs from counter 702 supplied via a multiplexer 722, which is also controlled by circuitry 714. When it is not outputing to addressable latch 706, the control memory 704 is available for being updated by the CPU via a CPU data bus and a bidirectional tristate buffer 724, which receives the SDT n-1 signal from memory 720 and control signals from circuitry 714 and from the CPU.

When the control memory 704 is being updated by the CPU, multiplexer 722 passes addresses from the CPU address bus to the control memory.

The output of addressable latch 706 is supplied along 24 parallel signalling wires corresponding to 24 communication channels via a transmit signalling output interface 726, which may be similar to that illustrated in Fig. 9 hereinabove or any other suitable interface circuitry.

It is noted that the control memory operates cyclically in outputing to the addressable latch and is approached by the CPU in an asynchronous manner. When the CPU addresses the control memory when it is engaged in outputing to the addressable latch, timing circuitry 714 provides a WTR 2 wait signal to the CPU until the cyclic operation is completed.

When there is a change in assignment of signalling the CPU searches for a communication channel having both signal and data portions free. Upon finding an available communication channel, the CPU transmits over the data carrying channel, as opposed to the signalling wire, assignment information regarding the new assignment.

Reference is now made to Fig. 33 which illustrates in block diagram form apparatus for treatment of out of band signalling at the receive end, as opposed to the transmit end described hereinabove. The circuitry shown here is similar in many respects to that of the transmit end described above but differs therefrom in that it does not contain a delay memory which is not required since the receive signalling circuitry merely monitors proper operation of the signalling wires and does not provide new assignments.

An RX signalling input interface 730 and an RX signalling output interface 732 each receive timing signals from timing circuitry 71 (Fig. 2) and may be similar in construction to the interface circuitry illustrated in Fig. 9 hereinabove. Interface 730 interconnects signalling wires corresponding to 24 communication channels to a multiplexer 734, typically 4 93L12 chips. The output of multiplexer 734 is supplied directly to an addressable latch 736, such as 6 LS 259 chips, which outputs along 48 parallel lines via interface 732 to signalling wires corresponding to the 48 telephone communication lines.

The output of multiplexer 734 is also supplied to control logic circuitry comprising TTL gates 738 which together with an adder 740, a signal detector charging memory 742 and a SDR memory 744 comprises signalling detection circuitry. Adder 740 receives an input from control logic circuitry 738 and provides an output to memory 742 and a SDR n signal to memory 744. Memory 742 provides an output to a second input of adder 740 and SDR memory 744 provides an SDR n-1 signal to circuitry 738. Circuitry 738 and SDR memory 744 both receive signals from timing and control circuitry 746 which receives timing signals from circuitry 71 (Fig. 2).

A counter 748 provides a six bit output to latch 736, memories 742 and 744 and to a signalling control memory 750, the latter via a multiplexer 752. Control memory 750, in turn provides a five bit output which operates multiplexer 734 for matching the received signalling information to the signalling wire indicated by the control memory 750. Both control memory 750 and multiplexer 752 receive timing inputs from circuitry 746 and operate in two modes, one in which the cyclic addressing of counter 748 provides cyclic, synchronized operation of latch 736 and multiplexer 734 and the second, which occurs when the cyclic operation is not taking place, in which the CPU interacts with the control memory 750 via the CPU data bus and a bidirectional tristate buffer 754 for updating thereof in an asynchronous manner.

Bidirectional tristate buffer 754 receives a five bit output from control memory 750 and the SDR n-1 output from memory 744, as well as control signals from the CPU and circuitry 746 and provides a six bit output to the CPU, which instructs the CPU to send an acknowledge signal in response to the received signalling information. This acknowledge signal is sent over a data channel. When the CPU attempts to interact with the control memory 750 during cyclic operation thereof, control circuitry 746 provides a WTR 4 wait signal to the CPU.

In summary it may be understood that the receive signalling circuitry described hereinabove provides the necessary matching between incoming signalling information and the appropriate signalling wires and also senses the presence of signalling information in order to provide an acknowledge signal indicating receipt thereof.

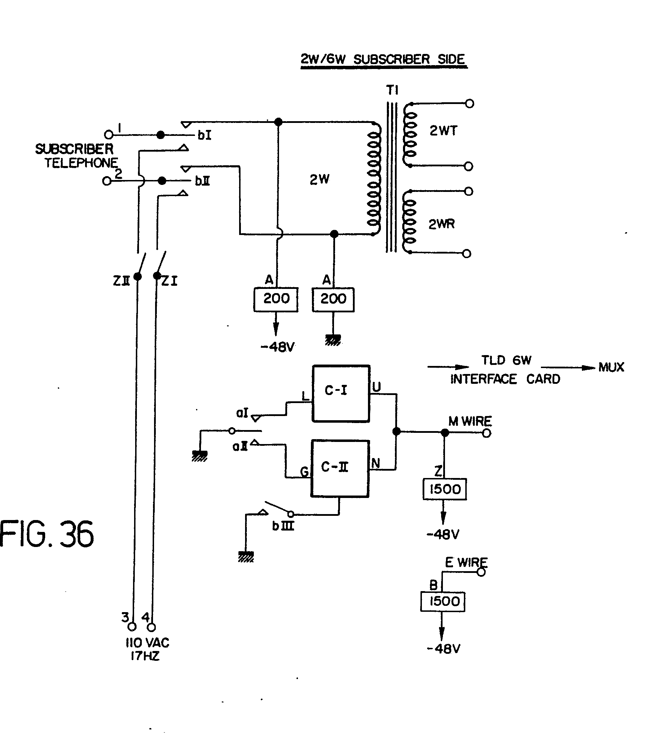

Reference is now made to Fig. 36 which illustrates in block diagram form interface circuitry coupling a 2-wire line to a 6-wire channel, such as at the subscriber terminal of TASI multiplex apparatus. Legs 1 and 2 of a 2-wire subscriber line are coupled either to a 110 VAC 17 HZ source, ready to receive a ringing impulse, when the telephone is not in use, or when the telephone is in use, they are coupled across the primary of a hybrid transformer T 1. A relay B having contacts b 1 and b 2 governs the connection status of the 2-wire subscriber line. A relay A is connected across the primary of transformer T 1 and converts dialing pulses generated by the telephone over the 2-wire subscriber line to on-off pulses for transmission. The secondary windings of transformer T 1 are coupled to respective transmit and receive wire pairs which may be connected to a multiplex or to subscriber terminals of TASI apparatus as aforesaid.

The remainder of the circuitry of Fig. 36 will be described hereinafter in connection with a functional description thereof.

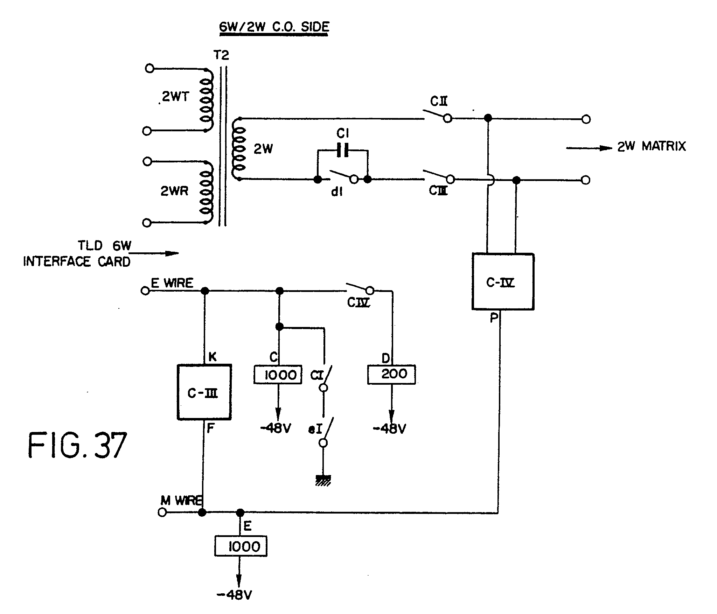

Referring now to Fig. 37 there is seen in block diagram form interface circuitry which couples a 6-wire channel such as at the output of TASI apparatus as aforesaid with a 2-wire line as at a C.O. terminal. Transmit and receiver wire pairs from a 6-wire channel are coupled across secondary cols of a transformer T 2, whose primary is coupled via a relay C to the two wire line. A relay D and a capacitor C 1 coupled in parallel thereto are inserted along one leg of the 2-wire line connected to the primary. The remainder of the circuitry will now be described in the overall functional description which follows:

### When a Subscriber Wishes to Receive a Line

When a subscriber wishes to receive a line he lifts the receiver causing activation of relay A. Relay contact a 1 energises a circuit C I at input L. Circuit C I provides a pulse at output U of 100 msec. This pulse is transmitted along the M wire via TASI apparatus to the E wire on the C.O. side (Fig. 37). The appearance of the 100 msec pulse on the E wire causes energization of relay C which, by virtue of the action of contact c 1 remains closed notwithstanding disappearance of the pulse on the E wire.

Contacts c 2 and c 3 on the 2-wire line are thus closed, connecting the primary loop of transformer T 2 to the C.O. and causing the C.O. to provide a dial tone.

The dial tone provided by the C.O. is transmitted via transformers T 2 and T 1 to the subscriber as an audio signal.

### Dialing

Dialing by the subscriber causes relay A to respond to the pulses generated by the telephone. The dialing

6

# 0 049 428

pulses pass via circuit C I but do not pass via circuit C II, since that circuit only passes pulses of duration at least 150 msec. Thus the dialing pulses are supplied to the M wire from terminal U of circuit C 1. These pulses are received on the E wire at the C.O. side (Fig. 37) at a time when relay C is already closed. As a result these pulses cause energization of relay D. Contact d 1, by opening and closing in accordance with the dialing pulses received on the E wire, such that the C.O. alternatively senses the loop resistance of the primary of transformer T 2 with and without the capacitor C 1 in series. This causes the selectors in the C.O. to make connection in accordance with the received dialing pulses, establishing audio contact between the dialing and the dialed subscribers.

## Termination of the Conversation

When the subscriber hangs up, relay A (Fig. 36) is deenergized, causing contact a 2 to couple circuit C II to ground at terminal G. Once 150 msecs have passed circuit C II couples terminal N to ground, so long as contact b 3 is open. Thus the M wire is coupled to ground, resulting in energization of the Z relay. As a result contacts z 1 and z 2 disconnect the ringing current from the subscriber line.

Grounding of the M wire causes grounding of the E wire on the C.O. side. A circuit C III is responsive to grounding of the E wire for at least 150 msec to ground its terminal F. This results in energization of an E relay, causing contact e 1 to de-energize relay C. As a result contacts c 2 and c 3 are opened disconnecting the C.O. from transformer T 2. The grounding of the M wire at the CO side, as a result of the grounding of terminal F causes grounding of the E wire at the subscriber side (Fig. 36). This results in energization of the B relay, causing contact b 3 to close, thereby terminating the grounding of terminal N of circuit C II. This terminates the grounding of the M wire at the subscriber side. The removal of this grounding is communicated to the C.O. side to the E wire on the C.O. side removing the grounding thereof and as a result circuit C III terminates the grounding at terminal F causing E relay to be de-energized. The M wire at the C.O. side is no longer coupled the ground, causing the E wire on the subscriber side to be decoupled from ground. The energization of the B relay causes de-energization of the Z relay. The decoupling of the e wire on the subscriber side from ground causes de-energization of the B relay. At this point the relays and other circuitry are prepared for commencement of a new conversation by the action of a subscriber in lifing the receiver.

## When a Subscriber Receives Ringing from the Central Office

At the central office (C.O.) side there appears on the 2-wire line a ringing current. This current is received by a circuit C IV which converts the ringing current to ground pulses.

The ground pulses appear at a terminal P and are supplied to the M wire at the C.O. side and thus appear on the E wire at the subscriber side. The appearance of these pulses on the E wire causes energization of the B relay in accordance with the ringing pulses. Contacts b 1 and b 2 are thus operative to periodically connect the 2-wire subscriber line to the ringing current to produce ringing. Once the subscriber lifts the receiver, the sequence described hereinabove for initiation of a conversation takes place.

The invention is not limited to what has been particularly shown and described hereinabove and in the drawings. Rather the scope of the invention is defined only by the claims which follow:

## Claims

1. A time assignment speech interpolation communications system for interconnecting a transmission trunk link (100) having a first plurality of communication channels to a second plurality of communication lines on both ends of the transmission trunk link, the second plurality exceeding the first plurality, each of said second plurality of telephone communication lines comprising audio transmission means and DC pulse signalling transmission means and said transmission trunk link comprising trunk audio transmission means and trunk DC pulse signalling transmission means, wherein there is provided apparatus for carrying out time assignment speech interpolation of audio carried on said audio transmission means, said apparatus including

first audio activity detection means (22, 53, 57) receiving signals along said second plurality of telephone communication lines and providing an output indication of audio activity;

transmit audio switching means (26) for selectively connecting audio bearing communication lines to said trunk audio transmission means;

transmit audio control means (65, 67) receiving the audio activity output indication, controlling said transmit audio switching means and providing audio assignment messages along said transmission trunk link;

receive audio control means (60) operative in response to assignment messages received along said transmission trunk link for providing a receive audio switching output indication;

receive audio switching means (52) operated by said receive audio switching output indication for selectively connecting audio bearing trunk audio transmission means to appropriate communication lines in accordance with said assignment messages;

first signalling detection means (710) receiving D.C. pulses along said second plurality of telephone communication lines and providing an output indication of signalling activity;

characterized in that it includes apparatus for providing time assignment interpolation of signalling information carried on said signalling transmission means, said apparatus including:

transmit signalling control means (704) receiving the signalling activity output indication, providing a transmit signalling switching output indication, and providing DC pulse signalling assignment information along said transmission trunk link;

transmit signalling switching means (700, 706) operated by said signalling switching output indication for selectively connecting signalling bearing communication lines to said trunk DC pulse signalling transmission means;

receive signalling control means (750) operative in response to assignment messages received along said transmission trunk link for providing a receive signalling switching output indication; and

receive signalling switching means (736, 734) operated by said receive signalling switching output indication for selectively connecting signalling bearing trunk signalling transmission means to appropriate communication lines in accordance with said assignment messages,

whereby transmission of DC pulse signalling along said trunk signalling transmission means is transparent and does not engage the trunk audio transmission means.

2. A time assignment speech interpolation communications system according to claim 1 and characterized in that each of said first plurality of communication channels comprises audio transmission means and D.C. pulse signalling transmission means.

3. A system according to claim 1 or claim 2 and characterised in that said means for providing assignment information comprises transmission apparatus (67) located at a first end of said transmission trunk link and operative for transmitting signalling assignment information over said audio transmission means of said first plurality of communication channels.

4. Apparatus according to claim 3, when dependent from claim 2, characterised in that said transmission apparatus (67) is operative for transmitting signalling assignment information over the audio transmission means of that one of said first plurality of communication channels on which the signalling transmission occurs.

5. Apparatus according to any one of the preceding claims, characterized by delay means coupled to said signalling transmission means (708) and operative to delay signalling information carried thereon until said second switching means is operative to complete a connection therefor.

6. Apparatus according to claim 1 and characterised by means (67) for transmitting signalling acknowledge messages in response to received signalling assignment information.

7. Apparatus according to claim 6, characterized in that said means (742) for transmitting is also responsive to the receipt of signalling information.

8. Apparatus according to claim 6, characterised by means (706) for disconnecting the signalling transmission means in respect of which an acknowledge message is not received.

**Revendications**

1. Système de communication à interpolation de parole suivant une attribution de temps pour l'interconnexion d'une liaison interurbaine de transmission (100) possédant une première multiplicité de canaux de communication, avec une seconde multiplicité de lignes de communication aux deux extrémités de la liaison interurbaine de transmission, la seconde multiplicité dépassant la première multiplicité, chacune de ces secondes multiplicités de lignes de communication téléphonique comprenant des moyens de transmission d'audiofréquence et des moyens de transmission de signalisation par impulsions de courant continu, et ladite liaison interurbaine de transmission comprenant de moyens de transmission interurbaine d'audiofréquence et des moyens de transmission interurbaine de signalisation par impulsions de courant continu, dans lequel on prévoit un appareil pour effectuer une interpolation de parole par attribution de temps de l'audiofréquence portée par lesdits moyens de transmission d'audiofréquence, ledit appareil comprenant

des premiers moyens de détection d'activité en audiofréquence (22, 53, 57) recevant des signaux sur ladite seconde multiplicité de lignes de communication téléphonique et offrant une indication de sortie d'activité en audiofréquence;

des moyens de commutation de transmission d'audiofréquence (26) pour connecter sélectivement des lignes de communication portant une audiofréquence auxdits moyens de transmission interurbaine d'audiofréquence;

des moyens de commande de transmission d'audiofréquence (65, 67) recevant l'indication de sortie d'activité en audiofréquence, commandant lesdits moyens de commutation de transmission d'audiofréquence et offrant des messages d'attribution d'audiofréquence sur ladite liaison interurbaine de transmission;

des moyens de commande de réception d'audiofréquence (60) agissant en réponse à des messages d'attribution reçus sur ladite liaison interurbaine de transmission afin d'offrir une indication de sortie de commutation de réception d'audiofréquence;

des moyens de commutation de réception d'audiofréquence (52) actionnés par ladite indication de sortie de commutation d'audiofréquence pour connecter sélectivement des moyens de transmission interurbaine d'audiofréquence portant de l'audiofréquence, à des lignes de communication appropriées conformément auxdits messages d'attribution;

des premiers moyens de détection de signalisation (710) recevant des impulsions de courant continu sur ladite seconde multiplicité de lignes de communication téléphonique et offrant une indication de sortie d'activité de signalisation;

caractérisé en ce qu'il comprend un appareil destiné à offrir une interpolation par attribution de temps d'information de signalisation portée par lesdits moyens de transmission de signalisation, ledit appareil comprenant:

des moyens de commande de transmission de signalisation (704) recevant l'indication de sortie d'activité de signalisation, offrant une indication de sortie de commutation de transmission de signalisation, et offrant une information d'attribution de signalisation par impulsions de courant continu sur ladite liaison interurbaine de transmission;

des moyens de commutation de transmission de signalisation (700, 706) actionnés par ladite indication de sortie de commutation de signalisation afin de connecter sélectivement des lignes de communication portant une signalisation, auxdits moyens de transmission interurbaine de signalisation par impulsions de courant continu;

des moyens de commande de réception de signalisation (750) agissant en réponse à des messages d'attribution reçus sur ladite liaison interurbaine de transmission afin d'offrir une indication de sortie de commutation de réception de signalisation, et

des moyens de commutation de réception de signalisation (736, 734) actionnés par ladite indication de sortie de commutation de signalisation de réception afin de connecter sélectivement des moyens de transmission interurbaine de signalisation portant une signalisation, à des lignes de communication appropriées conformément auxdits messages d'attribution,

de telle sorte que la transmission de la signalisation par impulsions de courant continu par l'intermédiaire desdits moyens de transmission interurbaine de signalisation soit transparente et n'affecte pas les moyens de transmission interurbaine d'audiofréquence.

2. Système de communication à interpolation de parole suivant une attribution de temps suivant la revendication 1, caractérisé en ce que chacun des canaux de communication de la première multiplicité comprend des moyens de transmission d'audiofréquence et des moyens de transmission de signalisation par impulsions de courant continu.

3. Système suivant la revendication 1 ou la revendication 2, caractérisé en ce que lesdits moyens destinés à offrir une information d'attribution comprennent un appareil de transmission (67) situé à une première extrémité de ladite liaison interurbaine de transmission et agissant de manière à transmettre une information d'attribution de transmission de signalisation par l'intermédiaire desdits moyens de transmission d'audiofréquence de ladite première multiplicité de canaux de communication.

4. Appareil suivant la revendication 3, lorsqu'elle dépend de la revendication 2, caractérisé en ce que ledit appareil de transmission (67) agit de manière à transmettre une information d'attribution de transmission de signalisation par l'intermédiaire des moyens de transmission d'audiofréquence de celui des canaux de communication de ladite première multiplicité sur lequel a lieu la transmission de signalisation.

5. Appareil suivant l'une quelconque des revendications précédentes, caractérisé par des moyens de retard couplés auxdits moyens de transmission de signalisation (708) et agissant de manière à retarder l'information de signalisation transportée par ceux-ci jusqu'à ce que lesdits seconds moyens de commutation soient actifs pour établir une connexion pour celle-ci.

6. Appareil suivant la revendication 1, caractérisé par des moyens (67) pour la transmission de messages de réception de signalisation en réponse à une information d'attribution de signalisation reçue.

7. Appareil suivant la revendication 6, caractérisé en ce que lesdits moyens (742) pour la transmission sont également sensibles à la réception de l'information de signalisation.

8. Appareil suivant la revendication 6, caractérisé par des moyens (706) pour déconnecter les moyens de transmission de signalisation concernant lesquels un message de réception n'est pas reçu.

**Patentansprüche**

1. Zeitzuweisung-Sprachinterpolation Kommunikationssystem zum Anschluß einer Fernübertragungsleitung (100) mit einer ersten Mehrzahl von von Kommunikationskanälen an beiden Enden der Fernübertragungsstrecke, wobei die zweite Mehrzahl die erste übersteigt und jede der besagten zweiten Mehrzahl der Telefonübertragungsleitungen aus NF-Übertragungseinrichtungen und aus Gleichstromimpulssignal-Übertragungseinrichtungen besteht und die besagte Fernübertragungsleitung aus NF-Fernübertragungseinrichtungen und aus Gleichstromimpulssignal-Fernübertragungseinrichtungen besteht, wobei Vorrichtungen vorgesehen sind zur Zeitzuweisung-Sprachinterpolation von auf besagten NF-Übertragungsvorrichtungen geführten NF-Signalen und die besagte Vorrichtung folgendes enthält:

erste NF-Betrieb erfassende Einrichtungen (22, 35, 57) welche Signale auf der besagten zweiten Mehrzahl von Telefon-Kommunikationsleitungen empfangen und eine Ausgangsanzeige des NF-Betriebs vorsehen;

NF-Übertragungsvermittlungeinrichtung (26) zum wahlweisen Anschluß NF übertragender Leitungen an besagte NF-Übertragungseinrichtungen;

NF-Übertragungsteuerungseinrichtung (65, 67) zum Empfang der NF-Betriebausgangsanzeige, zum Steuern besagter NF-Übertragungsvermittlungeinrichtung und zum Vorsehen von NF-Zuweisungsmeldungen auf besagter Fernübertragungsstrecke;

NF-Empfang Steuereinrichtung (60) die funktionell auf Zuweisungsmeldungen anspricht welche auf besagter Fernübertragungsstrecke empfangen werden, um eine NF-Empfangvermittlungausgangsanzeige vorzusehen;

NF-Empfangvermittlungseinrichtung (52), von besagter NF-Empfangsvermittlungausgangsanzeige betätigt, zum wahlweisen Anschluß NF führender NF-Fernübertragungsstrecken an geeignete Kommunikationsleitungen entsprechend besagter Zuweisungsmeldungen;

erste Signalerfassungseinrichtung (710) zum Empfang von Gleichstromimpulsen auf besagter zweiter Mehrzahl von Telefonkommunikationsleitungen und zum Vorsehen einer Ausgangsanzeige des Signalisierbetriebs;

gekennzeichnet durch Vorrichtungenzum Vorsehen von Zeitzuweisungsinterpoationen der Signalisierungsinformation, die auf besagten Signalisierungübertragungsvorrichtungen geführt wird, wobei die besagte Vorrichtung aus folgendem besteht:

Übertragungsignalisierung-Steuereinrichtung (704) zum Empfang der Signalisierungbetriebausgangsanzeige, zum Vorsehen einer Übertragungsignalisierung-Vermittlungsausgansanzeige und zum Vorsehen von Gleichstromimpuls-Signalisierungzuweisungsinformation auf besagter Fernübertragungsstrecke;

Übertragungsignalisierung-Vermittlungseinrichtung (700, 706), von besagter Signalisierungvermittlungsausgangsanzeige betätigt, zum wahlweisen Anschluß von Signalisierung führenden Kommunikationsleitungen an besagte Gleichstromimpuls-Fernsignalisierung-Übertragungseinrichtungen;

Empfangssignalisierung-Vermittlungseinrichtung (756, 734), durch besagte Empfangssignalisierungvermittlung-Ausgangsanzeige betätigt zum wahlweisen Anschluß von Signalisierung führenden Fernsignalisierung-Übertragungseinrichtungen an geeignete Kommunikationsleitungen entsprechend besagter Zuweisungsmeldungen durch welche die Übertragung von Gleichstromimpulssignalisierung auf besagten Fernsignalisierung-Übertragungseinrichtungen transparent ist und nicht zum Ansprechen der NF-Fernübertragungseinrichtung führt.

2. Ein Zeitzuweisung-Sprachinterpolation Kommunikationssystem nach Anspruch 1, dadurch gekennzeichnet, daß jede der ersten Mehrzahl von Kommunikationskanälen aus NF-Übertragungseinrichtungen und aus Gleichstromimpulssignalisierung-Übertragungseinrichtungen besteht.

3. Ein System nach Anspruch 1 oder Anspruch 2, dadurch gekennzeichnet, daß die besagte Einrichtung zum Vorsehen von Zuweisungsinformation aus einer Übertragungsvorrichtung (67) besteht, die sich an einem ersten Ende der besagten Fernübertragungsstrecke befindetund zum Übertragen von Signalisierungzuweisungsinformation auf besagter NF-Übertragungseinrichtung der besagten ersten Mehrzahl von Kommunikationskanälen betrieblich ist.

4. Vorrichtung nach Anspruch 3 bei Abhängigkeit von Anspruch 2, dadurch gekennzeichnet, daß die besagte Übertragungsvorrichtung (67) zum Übertragen von Signalisierungzuweisungsinformation auf NF-Übertragungseinrichtungen jener der besagten ersten Mehrzahl von Kommunikationskanälen betrieblich ist, auf welchen die Signalisierungsübertragung stattfindet.

5. Vorrichtung nach einem der vorhergehenden Ansprüche, gekennzeichnet durch Verzögerungseinrichtungen, die an besagte Signalisierungübertragungseinrichtungen (708) gekoppelt sind und zum Verzögern der darauf geführten Signalisierungsinformation betrieblich sind, bis die besagte zweite Vermittlungseinrichtung zum Vervollständigen eines Anschlusses daran betrieblich ist.

6. Vorrichtung nach Anspruch 1, gekennzeichnet durch Einrichtungen (67) zum Übertragen von Signalisierung-Quittiermeldungen bei Ansprechen auf empfangene Signalisierung-Zuweisungsinformation.

7. Vorrichtung nach Anspruch 6, dadurch gekennzeichnet, daß besagte Einrichtung (742) zum Übertragen auch auf den Empfang von Signalisierungsinformation anspricht.

8. Vorrichtung nach Anspruch 6, gekennzeichnet durch Einrichtungen (706) zum Abschlaten der Signalisierungübertragungseinrichting, für welche eine Quittiermeldung nicht empfangen ist.

FIG. 1

SYSTEM LAYOUT

A RADIO LINK

B CABLE LINK

FIG. 2a

FIG. 2b

FIG. 2c

FIG. 2d

FIG. 2e

FIG. 2f

SYNCHRONIZATION FRAME (1500 µsec)

| 1 | 2 | 3 | 4 | 5 | 6 | 7 | 8 | 9 | 10 | 11 | 12 | 1 |

SIG. FRAME 1

SAMPLE RATE 8 KHZ

SIG FRAME 2

125 µs.

| 193 | 1 | 2 | 3 | 4 | 5 | 24 | 193 | 1 | 2 | 3 | 4 | 5 | 6 |

5.18 µ — 0.65 µ

| $t_A$ | $t_B$ | $t_C$ | $t_D$ | $t_E$ | $t_F$ | $t_G$ | $t_H$ | — | $t_A$ | $t_B$ | $t_C$ | $t_D$ | ----- |

193

| $P_1$ | $P_2$ | $P_3$ | $P_4$ | $P_5$ | $P_6$ | $P_7$ | $P_8$ | $P_1$ | $P_2$ | $P_3$ | $P_4$ | $P_5$ | $P_6$ | $P_7$ | $P_8$ | — | $P_1$ | $P_2$ | $P_3$ | $P_4$ | $P_5$ | $P_6$ | $P_7$ | $P_8$ |

| $t_1$ | $t_2$ | $t_3$ | $t_4$ | $t_5$ | $t_6$ | $t_7$ | $t_8$ | $t_9$ | | $t_1$ | $t_2$ | $t_3$ | $t_4$ | $t_5$ | $t_6$ | $t_7$ | $t_8$ | $t_9$ |

62 nsec

FIG. 3

0 049 428

FIG. 4a

NOTE: ALL TIMING PULSES WITH SUFFIX "T"

NOTE: ALL TIMING PULSES WITH
SUFFIX "T"

FIG. 4b

FIG. 4c

NOTE: ALL TIMING PULSES WITH SUFFIX "T"

0 049 428

FIG. 5

CLC $t_A$ $t_B$ $t_C$ $t_D$ $t_E$ $t_F$ $t_G$ $t_H$ $t_A$ $t_B$ $t_C$ $t_D$ $t_E$ $t_F$ $t_G$ $t_H$

193

SYNC 23    SYNC 23 SHOULD BE CONNECTED TO LINE 0, LINE 1 AND TRUNK 22

SYNC 0    SYNC 0 SHOULD BE CONNECTED TO LINE 2, LINE 3 AND TRUNK 23

TXC

$CA_0 \div CA_5$

| TRUNK 23 | | — | TRUNK 0 | |
|---|---|---|---|---|
| LINE 46 | LINE 47 | — | LINE 0 | LINE 1 |

DURING WIRING CONNECT AS FOLLOW

SYNC 0 → { LINE 2,3 / TRUNK 23 }

SYNC 1 → { LINE 4,5 / TRUNK 0 }

SYNC 22 → { LINE 46,47 / TRUNK 21 }

SYNC 23 → { LINE 0,1 / TRUNK 22 }

FIG. 6

0 049 428

FIG. 7a

COUNTER '192+1' 212

216 ÷24 (LS161) — CA5
CA1

214 ÷8 (LS161) — CLB CLA CAO
1ST FS.

210 (OR gate)

208 (AND gate)

206 ÷10 (LS161)

200 PLL (XR215)

15.44 MHz

204 OSC 1.544 MHZ (OTIS TADIRAN)

202 INT / EXT

1.544 MHZ EXT

220 FF ST

222 FF '193'

218 CLB ÷ CA5 (AND gate)

254 ADDITIONAL CLOCK '12' (AND gate)

'192 ÷ 193'

224 (AND gate)

ADDITIONAL CLOCK EN

'193'

CL

CLC

NOTE: ALL TIMING PULSES WITH SUFFIX 'R'

14

FIG. 7b

NOTE ALL TIMING PULSES WITH
SUFFIX 'R'

FIG. 7c

NOTE: ALL TIMING PULSES WITH SUFFIX "R"

0 049 428

FIG. 8

FIG. 9a

0 049 428

FIG. 9b

LINES 13_47

FROM T1a SYNC →○ ⁄ 115
FROM MUXED OUT OF CODERS →○

S/P (LS164) — 111

2/1 MUX (LS157) — 119

LATCH (LS374) — 123

8

Ti
TO SPEECH DETECTOR UNIT

TX DELAY MEMORY
48x 384x125μS=48msec
(48x384=18432bytes)
(16x4116) — 125

CAT6÷CAT14

LATCH (LS374) — 131
TO TX BUFFER MEMORY
8
CAT0÷CAT5

LATCH (LS374) — 121

LINES 2,4..48

FROM T1b SYNC →○ ⁄ 117
FROM MUXED OUT OF CODERS →○

S/P (LS164) — 113

CAT0÷CAT5 6

9

6

CLAT

÷48 (LS161) — 127

CAT COUNTER

÷384 (LS161) — 129

FIG. 10a

TX BUFFER MEMORY ACCESS

CAT0÷CAT5 ADD ON WRITE CYCLE

CMT0÷CMT5 ADD ON READ CYCLE

CAT1—CAT5 ADD ON READ CYCLE DURING 1-1

FIG. 10b

FIG. 11a

FIG. 11b

FIG. 11c

FIG. 12a

FIG. 12b

FIG. 13a

SERIAL TO PAR. CONV. 8 DELAY MEMORY

FIG. 13b

FIG. 14a

FIG. 14b

ECH$_0$ TH.

TO COMPARATOR CIRCUITS

SAMPLE FROM RX BUFFER MEM OUTPUT → EXPANDER (412) → PEAK DETECTOR (414)

SPDn → 6db HYSTERESIS INSERTION LOSS (422)

HYBRID LOSS COMPENSATOR (420)

READ WRITE CONTROL (416)

COUNTER CIRCUITRY FOR 50mS HANGOVER 4mS SUPRESSION (418)

55

FIG. 14c

FIG. 15a

FIG. 15b

FIG. 16a

FIG. 16b

FIG. 16c

0 049 428

FIG. 17

37

MESSAGE INTERRUPT

```
       ┌─────────┐     ┌──────────┐      ┌──────────┐
       │RESET FLAG I│    │          │      │  ASSIGN  │  NO
( MINT )│RESET T1  │───▶│SAVE TRUNK│────▶│ MESSAGE  │────▶
       │SAVE REG IN│    │NO IN LREG│      │          │
       │  STACK   │     └──────────┘      └──────────┘
       └─────────┘                           │ YES
                                             ▼
                                          (NITUV)
```

ASSIGN MESSAGE → NO → SIGNAL MESSAGE → NO → SYNC MESSAGE → NO →

YES (NITUV) · YES (ITUT) · YES (RSYCH)

→ IDLE MESSAGE ROUTE

ACK MESSAGE — NO → (STK)

YES → (ISHUR)

MESSAGE FORMAT

| 7 | 6 | 5 | 4 | 3 | 2 | 1 | 0 |
|---|---|---|---|---|---|---|---|
| TYPE | | MESSAGE CONTENT | | | | | |
| 0 | 0 | ASSIGNMENT | | | | | |
| 0 | 1 | SIGNALLING | | | | | |
| 1 | 0 | SYNC | | | | | |
| 1 | 1 | ACKNOWLEDGE (IDLE) | | | | | |

# FIG. 18a

NITUV → | RECEIVED LINE NO → CMR I | → | PREPARE ACK MESSAGE FOR SENDING BACK | → ( CALL SENDM ) → STK

ITUT → | RECEIVED LINE NO → SCMR | → | UPDATE SCRR TABLE & SCMR I | → STK

INT 20 → | [CMRi]→[CMR] | → RET

INT 20 OCCURS ON THE SAME TRUNK AS MINT BUT AFTER 20 Msec DELAY

SENDM – PLACES THE MESSAGE REQUEST IN QUEUE FOR TRUNKS

ACKQ – REMOVES THE RECEIVED ACK. MESSAGE FROM ACK. QUEUE.

# FIG. 18b

FIG. 18c

0 049 428

RSY₃ → MSG = SYNC O

YES → [MO] = [MO]+1 → [MO] ≥ OFH

YES → FLAG 4 = 1 → STK

FOR RESYNCRONIZATION

NO → STK (from MSG = SYNC O)

NO → STK (from [MO] ≥ OFH)

ISHUR → PREPARE LINE 8 TRUNK NO → CALL ACKQ → STK

## FIG. 18d

42

RESET TO CPU → INIT → DEFINE STACK INIT 8251 → PREPARE BRANCH ADD INADD = [CRTIN] → EI → LOOP

} PART OF INITIALIZATION OF THE SYSTEM

CRT INT → INTBR → SAVE ALL REG IN STACK → GO ACC TO BRANCH ADD INADD [10 00,100]

## FIG. 19a

FIG. 19b

CI

CO

CI → INPUT CHAR FROM 8251 → CO → SAVE CHAR IN BREG INPUT STATUS OF 8251 → IS TXRDY=1 → YES → RECALL CHAR TO A SEND BACK CHAR TO CRT (SOFT COPY)

NO

CRLF → PREPARE A CR IN REG A → OUTPUT THE CHAR CALL(CO) → PREPARE A 'LF' IN REG A → RET ← MASK OUT PARITY BIT & MOVE CHAR TO B REG

LBYTE → PREPARE MEM CONTENT FOR PRINT

HXD → CONVERT 4 BIT BINARY NUMBER TO ASC11 CODE

HILO → INCREMENT & CHECK IF START ADD=END ADD

NIBLE → CHECK IF INPUT CHAR IS LEGAL HEXA NUMBER

DETAILS SEE IN THE INTELLEC 8 LIBRARY

FIG. 19c

0 049 428

44

FIG. 20a

STORE[CMO] IN CMI ,CM2 &CM3 acc to NBR cont

DECR C REG (NUMBER OF ADD)

C < O

YES → ERROR

NO

EX2

STORE CREG IN NBR

CHAR [CRI]

NO

CHAR [CR2]

NO → ERROR

YES

EX3

JUMP ACC TO ADD IN BUFF I

YES

EX4

JUMP ACC TO ADD IN BUFF 2

FIG. 20b

| 1 BYTE | NBR | [NUMBER OF PARAMETERS] |
| 2 BYTE | CMO | [TEMPORARY PARAMETER] |
| 2 BYTE | CM3 | [3rd PARAMETER − 2nd PARAMETER] |
| 2 BYTE | CM2 | [2nd PARAMETER − 1st PARAMETER] |
| 2 BYTE | CMI | [1st PARAMETER] |
| 1 BYTE | CRI | [1st LEGAL CHAR] |
| 1 BYTE | CR2 | [2nd LEGAL CHAR] |
| 2 BYTE | BUFF I | [1st JUMP ADD] |
| 2 BYTE | BUFF 2 | [2nd JUMP ADD] |

46

0 049 428

FIG. 21

SUBS → SUBS → NBR = [ I ]
CRI = [ ]
CR 2 = [CR]
BUFFI = SUBS 0
BUFF2 = ERROR → EXPR

SUBS 0 → PREPARE NEXT INADD = SUBS I → STK

SUBS I → GET THE CHAR (CALL C I)

CHAR = ' ' — YES → SUBS 4 → PRINT OUT MEMORY CONTENT IN HEXA FORMAT PRINT '-' CALL LBYTE → PREPARE NEXT INADD = SUBS 2 → STK

NO → ERROR

FIG. 22a

FIG. 22b

0 049 428

FIG. 23a

FIG. 23b

FIG. 23c

0 049 428

FIG. 24a

FIG. 24b

INPUT

B REG=MESSAGE
OR TRUNK

OUTPUT

B REG = TRUNK NBR
H=12, L= NEW SAQ ADD
A REG=$FF_H$ (RESET
　　　　　CHAR OF TIMER)
DE=OLD SAQ IIXXH
C REG—NOT AFFECTED

[SAQ]– START OF ACK. QUEUE

[EAQ]– END OF ACK. QUEUE

SAQ – START OF ACK. QUEUE
　　　POINTER ADD.

EAQ – END OF ACK. QUEUE
　　　POINTER ADD.

0 049 428

FIG. 25a

TX- PHASE 1 (SYNC 1)

FIG. 25b

RX-PHASE 1   (SYNC 1)

FIG. 25c

RX – PHASE 2 (SYNC2)

# 0 049 428

FIG. 25d

PHASE 3   ROUTINE WORK

NOTE: FLAG  1  IS SET  TO 1  BY INT  3
        IF  THE  SYSTEM  DOESN'T  RECEIVE
        AND  MESSAGE  DURING 1 SEC  (T1  TIMER)

POWER ON
RESET

BEGIN

TERMINAL
RE SYNC COUNTER
& MONITOR INIT

INIT

TABLES
INIT

SYNC

NO   SYNC

CALL SSYNC
(SYNC O, SYC=55)

T2>FC

NO

MODEM
SYNC OK
?

YES

NO

YES

SYN
3

FIG. 26a

X 3

CALL SSYNC
(SYNC O, SYC=55)

T2=O
MS=O
F3=O
SYC=AA(SYNCI)

SYN
11

SYN 11

CALL SSYNC (SYNC1, SYC=AA)

FLAG 3 = 0 — YES — T2 = TMAX 1 (FF) — YES — SYN 3

NO (top)

NO — SYN 2

T2 ≥ TMAX 2 07 — NO / YES — [SYC] = SYNC 2 = 66 — SYN 8 — FLAG 2 = 1 ? — NO — SYN 10 — CALL SSYNC (SYNC2, SYC=66) — T2 = TMAX 1 (3F) — YES / NO

YES — SYN 9

T2 = TMAX 3 (OF) — YES — SYNOK

## NOTES

FLAG I – I-I FLAG

FLAG 2 – END OF SECOND SYNC. PHASE FLAG.

FLAG 3 – END OF FIRST SYNC. PHASE FLAG.

T2 – SENT SYNC. MESSAGES COUNTER (PAIRS)

TMAX1 = FF NUMBER OF SENT SYNC.
        MESSAGE BEFORE FLAG I = I

TMAX2 = 07 NUMBER OF SENT SYNC.I
        MESSAGE AFTER FLAG 3 = I

TMAX3 = 3F NUMBER OF SENT SYNC.2
        MESSAGE AFTER FLAG 2 = I

MS = RECIEVED SYNC. MESSAGE COUNTER.

C6 = INDEX COUNTER FOR LINE NUMBER.

RESNC – NEW SYNC. COUNTER

SYNC I – AAH I$^{st}$ SYNC. MESSAGE.

SYNC 2 – 66H 2$^{nd}$ SYNC. MESSAGE.
        (SYNC. CHAR FOR MODEM SYNC.).

SYNC 0 – 55H SYNC CHAR FOR FRAME SYNCRONIZATION.

FIG. 26b

0 049 428

60

FIG. 26c

# FIG. 26d

FIG. 27a

0 049 428

# FIG. 27b

STRT I · (B)

ANY CHANGE IN SPD TABLE → NO → SIG

YES

CH

SPD TABLE→B REG FIND IN WHICH PAIR OF BITS WAS CHANGE | D REG=SPD CHANGE

CH I

RUBOUT REQUEST FROM SPD TABLE

GENERATE LINE NBR & STORE IN REG

E REG= LINE NUMBER

SPD BIT IN CRT IS O → YES / NO → SIG

INCR ACTIVITY COUNTER

CHON

HAS THE LINE A TRUNK → NO → CHON I

YES

SET SPD FLAG IN CRT
CMTI → CMI UPDATE COMLT WITH NEW BUSY TRUNK

SIG

GEN ADD FOR CRT
CRT→A REG

SPD FLAG — ON-"I"
— OFF-"O"

A REG | | ///// TRUNK NO |

CHECK SPD CHANGE — ON / OFF

SPD BIT IN CRT IS I ? → NO → CHOF

YES

DCR ACTIVITY COUNTER

CHOFF

64

FIG. 27c

FIG. 27d

FIG. 27e

0 049 428

FIG. 27f

FIG. 27g

0 049 428

FIG. 28a

FIG. 28b

| | tA | tB | tC | tD – tH |
|---|---|---|---|---|
| TX MODE | READ | TX MODEM ACCESS | WRITE | |
| CPU MODE | | | | READ/WRITE |

FIG. 29a

| | $t_A$ | $t_B$ | $t_C$ | $t_D$ | $t_E \div t_H$ |
|---|---|---|---|---|---|
| | | | | | |
| RX MODE | | READ | 25 Msec TIMER ACCES | WRITE* | |
| CPU MODE | READ/WRITE | | | | READ/WRITE |

NOTE
* $t_D$ TIME SLOT IS USED IN RX
  MODE ONLY IF NEEDED BY RM
  OR 25 Msec TIMER LOGIC ELSE
  IT CAN BE USED BY CPU.

FIG. 29b

FIG. 30b

0 049 428

$C_0 - C_3$

BLANK

B C3 C2 C1 C0

$A_4 A_3 A_2 A_1 A_0$

16 SAMPLES
MEMORY
OF
TX MSG
BIT
(32 x 8)
PROM

(63LS081)

8

TX MODEM OUTPUT
EACH BIT IN MSG IS
OUTPUTTED BY
8 PCM SAMPLES

FIG. 30c

0

7
8

ROM 15
CONTENT 16

31

$P_n = 0$ SAMPLES

$P_n = 1$ SAMPLES

BLANK CODE

0 049 428

# FIG. 30 a

CA$_1$ - CA$_5$

BIT COUNTER MEMORY
ADD BUS CA1÷CA5

7

504 — CH1 BIT COUNTER

| | | P | $b_4$ | $b_3$ | $b_2$ | $b_1$ | $b_0$ |

$1460_H$ ÷ $1477_H$
($60_H$ ÷ $77_H$)

CH23 BIT COUNTER

| | | P | $b_4$ | $b_3$ | $b_2$ | $b_1$ | $b_0$ |

$b_0$ - $b_4$ & Pn

$DO_0$ - $DO_4$ & P

CPUADD BUS   CA5÷CA1; b4;b3

7    5

518 — ADD BUS MUX 2/1 (LS365)

7

$1400_H$

| 8 | 7 | 6 | 5 | 4 | 3 | 2 | 1 |
| 16 | 15 | 14 | 13 | 12 | 11 | 10 | 9 |
| 24 | 23 | 22 | 21 | 20 | 19 | 18 | 17 |

502 — CH$_1$ MESSAGE

CPU DATA BUS   8

$1400_H$ ÷ $145F_H$
(82S09)

$14FC_H$

| 8 | 7 | 6 | 5 | 4 | 3 | 2 | 1 |
| 16 | 15 | 14 | 13 | 12 | 11 | 10 | 9 |
| 24 | 23 | 22 | 21 | 20 | 19 | 18 | 17 |

CH$_{23}$ MESSAGE

FROM TX CONT. MEMORY

CMT6 — MSG. FLAG — M
tA·t8 — 530
— $\overline{RM}$
CMT7 — BLANK FLAG — B — B
— 528
— RB

$b_0$  $b_1$  $b_2$
3

$DO_0$
$DO_1$
LATCH
(LS373) CL
$DO_6$
$DO_7$
520
tB·t4

DIGITAL MUX 8→1 (LS151)
522
$SP_K$

$\overline{RM}$ = $\overline{DEC24 \cdot M \cdot \overline{B} \cdot P3}$     DE24 = b3.b4

$\overline{RB}$ = $\overline{(RBC_1 \cdot t2 + DEC31 \cdot \overline{M})P3}$    ;DEC31= b0· b1· b2·b3·b4

76

RX DELAY MEMORY

| 1 2 3 4--237 238 239 240 | 610 |

239 240 | 1 2--235 236 237 238

237 238 239 240 | 233 234 235 236

235 236 237 238-231 232 233 234

DELAY MEMORY

7 8 9 10---3 4 5 6

5 6 7 8 | 1 2 3 4

3 4 5 6--239 240 | 1 2

8

EXPANDER 8/12    616

12

618
1 BIT DELAY

8

620
MULTIPLIER

8 MSB

xn

622

624
ADDER

4yn+1    ÷4    yn+1

626
ACCUMULATOR

yn

4yn-yn

630
ADDER

X4

628

5+8

612
SPEED UP COUNTER (LS161)

CHANNEL INCR

SAMPLES INCR

FIG. 31a

0 049 428

77

FIG. 31b

FIG. 32a

FIG. 32b

FIG. 32c

FIG. 33a

FIG. 33b

810

812

814

816

| | LINE 1 | | CH 1 | | | | CH 1 | | LINE 1 | |
|---|---|---|---|---|---|---|---|---|---|---|
| C.O. | 2W | 2W/6W TLD CONCENTRATOR | 6W | MULTIPLEX 24 CH | | MULTIPLEX 24 CH | 6W | 2W/6W TLD CONCENTRATOR | TO SUBSCIBERS | |
| | LINE 192 | | CH 24 | | | | CH 24 | | LINE 192 | |

FIG. 34

84

FIG. 35

2W/6W SUBSCRIBER SIDE

FIG. 36

6W/2W C.O. SIDE

FIG. 37